# EUROPEAN PATENT APPLICATION

(11) **EP 4 822 612 A1**
(43) Date of publication of application: **14.10.2026**
(21) Application number: 26166289.4
(22) Date of filing: 20.03.2026
(51) Int. Cl.: G06N 10/70, G06N 10/20

(54) **COMPUTER PROGRAM, QUANTUM COMPUTATION SUPPORT METHOD, AND INFORMATION PROCESSING APPARATUS**

(30) Priority: 11.04.2025 JP 2025065893
(71) Applicant: FUJITSU LIMITED, Kawasaki-shi, Kanagawa 211-8588 (JP)
(72) Inventor: AKAHOSHI, Yutaro, Kawasaki-shi, 211-8588 (JP)
(74) Representative: Haseltine Lake Kempner LLP

(57) **Abstract**

A processing unit identifies a first joint element from a first patch element group included in a first patch that appears in the course of lattice surgery, performs an optimization process for optimizing an application order of controlled NOT (CNOT) gates for a syndrome measurement circuit in the first joint element with respect to a direction of a logical operator defined for the first joint element, and stores, in a storage unit, optimal circuit information associating the first joint element with the application order of CNOT gates. The processing unit identifies, upon detecting a second path during execution of lattice surgery, a second joint element corresponding to the first joint element from a second patch element group included in the second patch, and assigns the application order of CNOT gates associated with the first joint element to the second joint element, based on the optimal circuit information.

## Description

### FIELD

The embodiments discussed herein relate to a computer program, a quantum computation support method, and an information processing apparatus.

### BACKGROUND

In computation using a quantum computer, quantum computation is performed according to a quantum circuit by applying gate operations to qubits. A qubit is the minimum unit of information used in computation. A qubit corresponds to a bit of a classical computer. A bit of a classical computer is called a classical bit. Unlike a classical bit, a qubit is also able to take a superposition state of "0" and "1".

Errors may occur in qubits due to interaction with the environment, errors in gate operations, and other factors. Therefore, quantum error correction is performed. Quantum error correction is a process of detecting and correcting errors by encoding a plurality of qubits in combination. An unencoded qubit is hereinafter referred to as a physical qubit. A qubit encoded using a plurality of physical qubits is hereinafter referred to as a logical qubit. A quantum computer that performs quantum computation while performing quantum error correction on logical qubits is called a fault-tolerant quantum computer (FTQC).

For example, a technique for performing quantum error correction on a logical qubit encoded with a surface code has been proposed. A surface code is an encoding method using a plurality of physical qubits arranged in a lattice. In the surface code, quantum error correction is performed based on the eigenvalues of a plurality of stabilizer operators. The stabilizer operators are defined on a lattice plane of the surface code. For example, X stabilizers and Z stabilizers are used as stabilizer operators.

Here, in a surface code, boundaries are defined along the outer edges of the lattice region. For example, a boundary where X stabilizers are arranged is referred to as an X boundary. A boundary where Z stabilizers are arranged is referred to as a Z boundary. An operator that acts on a logical qubit is called a logical operator. A logical operator is defined as a product of Pauli operators, each acting on a different physical qubit, along a path connecting disconnected boundaries of the same type. For example, a logical X operator is a product of a plurality of Pauli X operators corresponding to a path connecting two disconnected X boundaries. A logical Z operator is a product of a plurality of Pauli Z operators corresponding to a path connecting two disconnected Z boundaries. A logical operator is freely deformable by applying stabilizer operators thereto. The length of a logical operator is the number of Pauli operators included in the logical operator. The number of Pauli operators included in a logical operator is also referred to as its weight. The length of the shortest logical operator, i.e., the minimum weight, corresponds to a code distance.

Furthermore, in a surface code, the presence or absence of an error and the physical qubit in which the error has occurred are identified by measuring the eigenvalues of a plurality of stabilizer operators. An eigenvalue of a stabilizer operator is called a syndrome. For example, an eigenvalue of an X stabilizer is called an X syndrome. An eigenvalue of a Z stabilizer is called a Z syndrome. A quantum circuit used for measuring a syndrome is called a syndrome measurement circuit.

A syndrome measurement circuit sequentially applies controlled NOT (CNOT) gates between an ancilla qubit for measurement and each physical qubit for a code. For example, in an X syndrome measurement circuit, an ancilla qubit is used as a control bit, and a physical qubit is used as a target bit. In a Z syndrome measurement circuit, a physical qubit is used as a control bit, and an ancilla qubit is used as a target bit.

Further, lattice surgery (LS) has been proposed as a method for performing a logical gate operation on a logical qubit encoded with a surface code. In lattice surgery, logical qubits are called patches. In lattice surgery, logical gate operations are performed on a plurality of logical qubits by operations including merging a plurality of patches and splitting patches. See, for example, the following literatures.
Japanese Laid-open Patent Publication No. 2021-192324 International Publication Pamphlet No. WO 2022/082254 U.S. Patent Application Publication No. 2019/0258757 U.S. Patent Application Publication No. 2025/0005423
Gyorgy P. Geher and three others, "Tangling schedules eases hardware connectivity requirements for quantum error correction," [online], Mar. 27, 2024, arXiv, [searched on Mar. 19, 2025], Internet <URL: https://arxiv.org/pdf/2307.10147>
Daniel Litinski and one other, "Lattice Surgery with a Twist: Simplifying Clifford Gates of Surface Codes," Quantum, volume 2, page 62, May 4, 2018
Gyorgy P. Geher and four others, "Error-corrected Hadamard gate simulated at the circuit level," [online], Jun. 27, 2024, arXiv, [searched on Mar. 19, 2025], Internet <URL: https://arxiv.org/pdf/2312.11605>
Christopher Chamberland and one other, "Circuit-level protocol and analysis for twist-based lattice surgery," PHYSICAL REVIEW RESEARCH 4, 023090 (2022), May 2, 2022
Yutaro Akahoshi and four others, "Partially Fault-Tolerant Quantum Computing Architecture with Error-Corrected Clifford Gates and Space-Time Efficient Analog Rotations," PRX Quantum 5, 010337, Mar. 5, 2024

In the course of lattice surgery, syndrome measurement is performed for quantum error correction. In syndrome measurement, hook errors may occur. A hook error is an error that occurs in an ancilla qubit in a syndrome measurement circuit and then propagates to physical qubits for a code via CNOT gates.

The order in which a hook error propagates to physical qubits depends on the order in which CNOT gates are applied to the physical qubits in a syndrome measurement circuit. If a plurality of hook errors propagate sequentially along the direction of a logical operator, the error correction capability corresponding to the code distance is not achieved, and a logical error may occur.

The shapes of patches used in lattice surgery are dynamically determined during execution of lattice surgery. Therefore, it is conceivable, for example, that each time a new patch appears during execution of lattice surgery, a classical computer calculates an application order of CNOT gates for each syndrome measurement circuit so that hook errors do not occur in an order along the direction of a logical operator. A quantum computer applies the CNOT gates to physical qubits in the application order calculated by the classical computer.

However, patches having various shapes are created in the course of lattice surgery. In the case of a patch having a complex shape, the structure of the logical operator is complex. For this reason, it takes time to calculate an application order of CNOT gates for the patch having the complex shape. If an application order of CNOT gates is calculated each time a new patch appears during lattice surgery, quantum computation by lattice surgery is delayed.

### SUMMARY

In one aspect, it is desirable to accelerate determination of an application order of CNOT gates.

In one aspect, there is provided a computer program that causes a computer to perform a process including: identifying a first joint element from a first patch element group included in a first patch that appears in a course of lattice surgery, the first joint element being a patch element connected to two or more other patch elements along two orthogonal directions; performing an optimization process for optimizing an application order of controlled NOT (CNOT) gates for a syndrome measurement circuit in the first joint element with respect to a direction of a logical operator defined for the first joint element; storing optimal circuit information in a storage unit, the optimal circuit information associating the first joint element with the application order of the CNOT gates obtained as a result of the optimization process; identifying, upon detecting during execution of the lattice surgery that a second patch appears in the course of the lattice surgery, a second joint element from a second patch element group included in the second patch, the second joint element being a patch element corresponding to the first joint element; and assigning the application order of the CNOT gates associated with the first joint element to the second joint element, based on the optimal circuit information.

### BRIEF DESCRIPTION OF DRAWINGS

Reference may be made, by way of example only, to the following drawings, in which:
FIG. 1 illustrates an information processing apparatus according to a first embodiment;
FIG. 2 illustrates an example of a quantum computing system according to a second embodiment;
FIG. 3 illustrates an example of hardware of the quantum computing system;
FIG. 4 illustrates characteristics of a qubit;
FIG. 5 illustrates an example of quantum error correction;
FIGS. 6A and 6B illustrate examples of basic gates used in fault-tolerant quantum computation;
FIG. 7 illustrates an example of a surface code;
FIG. 8 illustrates an example of boundaries defined in a surface code;
FIGS. 9A and 9B illustrate examples of logical operators;
FIG. 10 illustrates examples of a deformed logical operator;
FIG. 11 illustrates an example of a path that does not form a logical operator;
FIG. 12 illustrates an example of error detection by syndrome measurements;
FIG. 13 illustrates an example of an X syndrome measurement;
FIG. 14 illustrates an example of a Z syndrome measurement;
FIG. 15 illustrates an example of a notation for a patch handled in LS;
FIGS. 16A and 16B illustrate examples of patch operations in LS;
FIG. 17 illustrates an example of patch operations in a logical ZZ measurement by LS;
FIG. 18 illustrates an example of patch operations in a logical CNOT operation by LS;
FIG. 19 illustrates an example of a Z measurement across a plurality of patches;
FIGS. 20A and 20B illustrate examples of arrangements of a plurality of patches;
FIG. 21 illustrates an example of a hook error in an X syndrome measurement;
FIG. 22 illustrates an example of a hook error in a Z syndrome measurement;
FIG. 23 illustrates examples of directions of hook errors;
FIGS. 24A and 24B illustrate examples of relationships between the direction of a hook error and the direction of a logical operator;
FIG. 25 illustrates examples of hook errors that do not cause any problem;
FIG. 26 illustrates an example of a hook error that causes a problem;
FIG. 27 illustrates examples of logical operators defined for a patch;
FIGS. 28A and 28B illustrate examples of directions of logical operators;
FIG. 29 illustrates an example of a code distance of a logical X operator during execution of LS;
FIG. 30 illustrates an example of an element decomposition of a patch;
FIG. 31 illustrates an example of functions of a classical computer;
FIG. 32 illustrates an example of an arrangement of a plurality of physical qubits;
FIG. 33 illustrates an example of an element decomposition method;
FIG. 34 illustrates examples of linear elements;
FIG. 35 illustrates an example of a joint element;
FIGS. 36A, 36B, and 36C illustrate an example of classifying joint elements;
FIG. 37 illustrates an example of identifying minimum-weight logical operators;
FIG. 38 illustrates an example of optimizing CNOT application orders;
FIG. 39 illustrates an example of a graph used for formulation of an optimization problem;
FIG. 40 illustrates examples of correspondences between a value of σ and a CNOT application order;
FIG. 41 illustrates a method for determining a coefficient hᵢ;
FIG. 42 illustrates a method for determining a coefficient Jᵢⱼ;
FIG. 43 is a diagram for describing the fixation of a value of σ;
FIG. 44 illustrates an example of resolving collisions;
FIG. 45 illustrates examples of patches that appear in the course of LS;
FIG. 46 is a flowchart illustrating an example of an optimization process;
FIG. 47 is a flowchart illustrating an example of a minimum-weight logical operator identification process;
FIG. 48 is a flowchart illustrating an example of a collision resolution process;
FIG. 49 is a flowchart illustrating an example of a CNOT sequence circuit generation process;
FIG. 50 illustrates an example of an optimization result for a three-way joint;
FIG. 51 illustrates examples of logical error rates for the three-way joint;
FIG. 52 illustrates an example of an optimization result for a four-way joint;
FIG. 53 illustrates examples of logical error rates for the four-way joint;
FIG. 54 illustrates a first example of an optimization result for a two-way joint;
FIG. 55 illustrates first examples of logical error rates for the two-way joint;
FIG. 56 illustrates a second example of an optimization result for a two-way joint; and
FIG. 57 illustrates second examples of logical error rates for the two-way joint.

### DESCRIPTION OF EMBODIMENTS

Hereinafter, embodiments will be described with reference to the drawings.

### [First Embodiment]

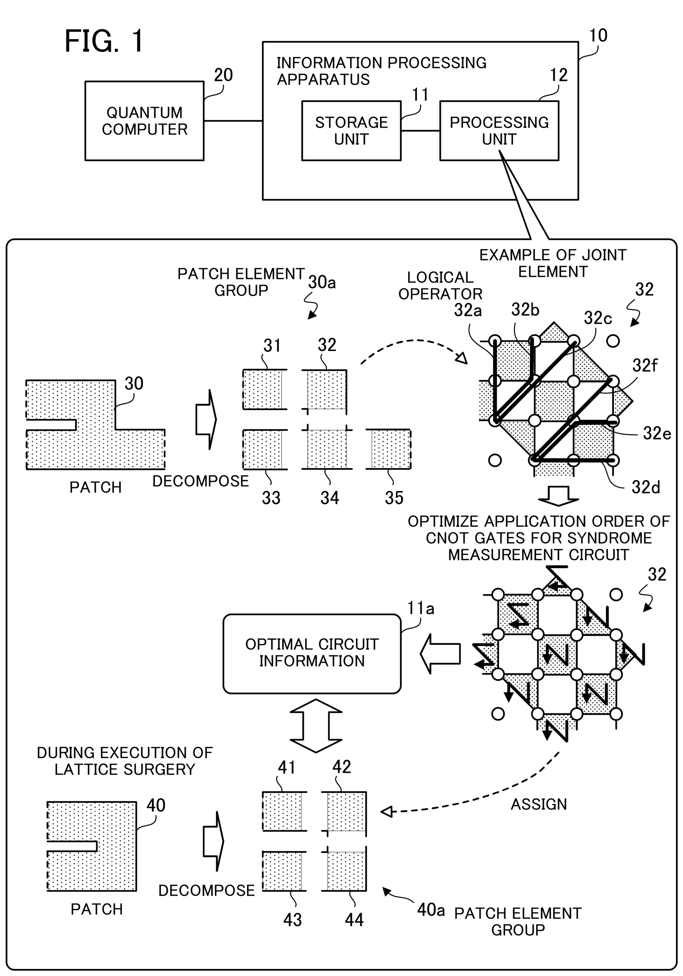

FIG. 1 illustrates an information processing apparatus according to a first embodiment. An information processing apparatus 10 is connected to a quantum computer 20. The quantum computer 20 includes a qubit device that is used for quantum computation. The qubit device has a plurality of physical qubits. The quantum computer 20 encodes logical qubits using a plurality of physical qubits and executes quantum computation using these logical qubits. A surface code is used for the encoding. The quantum computer 20 performs logical gate operations on a plurality of logical qubits using lattice surgery. The quantum computer 20 performs syndrome measurement for quantum error correction on patches handled in lattice surgery. In the following, lattice surgery is abbreviated as LS.

The information processing apparatus 10 includes a storage unit 11 and a processing unit 12. The storage unit 11 may be a volatile semiconductor memory such as a random access memory (RAM) or a non-volatile storage device such as a hard disk drive (HDD) or a flash memory. The processing unit 12 is, for example, a processor such as a central processing unit (CPU), a graphics processing unit (GPU), or a digital signal processor (DSP). However, the processing unit 12 may include a special-purpose electronic circuit such as an application specific integrated circuit (ASIC) or a field programmable gate array (FPGA). The processor executes a program stored in a memory (or the storage unit 11) such as a RAM. A set of a plurality of processors may be referred to as a multiprocessor or simply as a processor. The information processing apparatus 10 supports determination of an application order of CNOT gates for a syndrome measurement circuit of the quantum computer 20 as follows. Here, the "application order of CNOT gates for a syndrome measurement circuit" indicates an order in which CNOT gates are applied to a plurality of physical qubits included in the syndrome measurement circuit.

The processing unit 12 identifies a first patch that appears in the course of LS. For example, information on the first patch may be input to the information processing apparatus 10 by a user before the quantum computer 20 executes quantum computation. More specifically, the information on the first patch may be input to the information processing apparatus 10 at the time of planning, compiling, or other processes of quantum computation using LS to be performed by the quantum computer 20 in the future.

In LS, first patches having various shapes are created by merging a plurality of patches, splitting patches, and deforming patches. A first patch includes a plurality of elements. The elements of a patch are hereinafter referred to as patch elements. In the qubit device included in the quantum computer 20, a plurality of physical qubits are arranged in a two-dimensional lattice. A logical qubit is configured by a part of the lattice in which the plurality of physical qubits are arranged. In the qubit device, in order to perform operations of merging, splitting, and deforming patches by LS, physical qubits for LS operations are arranged at boundaries between logical qubits. The processing unit 12 divides a patch according to the arrangement of the physical qubits for such operations, and defines each divided region as one patch element. Sides forming the outer edges of the patch are parallel to the sides of the lattice in which the plurality of physical qubits are arranged.

For example, a first patch is a patch created by merging a plurality of patches or by deforming a patch. The first patch is decomposed into a first patch element group. A patch 30 is an example of the first patch. The patch 30 is formed of a plurality of physical qubits arranged in a lattice. However, illustration of the plurality of physical qubits forming the patch 30 is omitted.

Here, in this example, it is assumed that measurements of a plurality of logical qubits using LS are performed in the Z basis. In this case, the end points of the patch involved in the measurements are X boundaries, and the other boundaries are Z boundaries. Therefore, the processing unit 12 only needs to perform a process for determining an application order of CNOT gates for each Z syndrome measurement circuit. The processing unit 12 is able to set a fixed application order of CNOT gates for X syndrome measurement circuits.

Specifically, boundaries of the patch 30 are defined at the outer edges thereof. In the example of FIG. 1, a boundary indicated by a dotted line at the outer edges of the patch is an X boundary. A boundary indicated by a solid line at the outer edges of the patch is a Z boundary. In the patch 30, for example, a code distance of a logical X operator after merging is temporarily longer than that before merging. Therefore, even if a hook error occurs along the logical X operator, a logical error is unlikely to occur. On the other hand, the structure of a logical Z operator defined for the patch 30 is complex. That is, in the patch 30, logical Z operators having a minimum weight are able to take various directions.

The definitions of the X boundary and the Z boundary may be reversed. In the case where the definitions are reversed, measurements of logical qubits in LS are performed in the X basis. Then, the processing unit 12 is able to limit targets of the process for determining an application order of CNOT gates to X syndrome measurement circuits, and is able to set a fixed application order of CNOT gates for Z syndrome measurement circuits.

The processing unit 12 decomposes the patch 30 into a patch element group 30a. The patch element group 30a is an example of the first patch element group. Patch elements are classified into two types.

The first type is a linear element. A linear element is a portion that is simply connected to other patch elements along one direction, and is not connected to other patch elements along any direction different from that one direction.

The second type is a joint element. A joint element is a portion that changes the orientation between adjacent patch elements or connects the patch elements. The joint element is connected to two or more other patch elements along two orthogonal directions. Joint elements include two-way joints, three-way joints, and four-way joints. Two-way joints are joint elements that connect two other patch elements, for example, in an L-shape. Three-way joints are joint elements that connect three other patch elements, for example, in a T-shape. A four-way joint is a joint element that connects four other patch elements in a cross shape.

In linear elements and joint elements of a patch, boundaries that are not used for connection with other patch elements correspond to X boundaries or Z boundaries of the patch. For example, the patch element group 30a includes linear elements 31, 33, and 35 and joint elements 32 and 34. The joint element 32 is a two-way joint. The joint element 34 is a three-way joint.

In a syndrome measurement circuit, in order to suppress the occurrence of a logical error caused by hook errors, it is preferable that the direction of a logical operator defined for a patch and a direction corresponding to the application order of CNOT gates are orthogonal to each other. As the logical operator, a logical operator having a minimum weight is considered, which is hereinafter referred to as a minimum-weight logical operator.

In addition, a logical operator is represented by a path connecting a plurality of physical qubits to which a plurality of Pauli operators included in the logical operator are applied. The direction of the logical operator is a direction in which the path corresponding to the logical operator extends. The direction of the logical operator may also be considered to be a direction from one to the other of two boundaries connected by the logical operator.

In a linear element, the direction of any minimum-weight logical operator is constant. For example, in the linear element 31, the shortest line segment connecting the upper and lower sides corresponding to Z boundaries represents a minimum-weight logical Z operator. Thus, for a logical Z operator in the linear element 31, an application order of CNOT gates such that a direction of a hook error is orthogonal to the direction of the logical Z operator is readily determined. Specifically, the direction of the minimum-weight logical Z operator defined for the linear element 31 is a vertical direction as viewed in the drawing. In this case, the application order of CNOT gates may be an order along the horizontal direction as viewed in the drawing. The order along the horizontal direction is, for example, upper right, upper left, lower right, and lower left for four physical qubits arranged at the vertices of a square.

In a joint element, the direction of a minimum-weight logical operator is not constant. For example, in the joint element 32, minimum-weight logical Z operators may take various directions. Thus, for a Z syndrome measurement circuit in the joint element 32, an application order of CNOT gates such that a direction of a hook error is orthogonal to the direction of the logical Z operator is not readily determined. Therefore, the processing unit 12 optimizes an application order of CNOT gates for each joint element. For example, a minimum-weight logical Z operator in the joint element 32 is also a minimum-weight logical Z operator in the patch 30.

The processing unit 12 identifies a first joint element from a first patch element group. For example, the processing unit 12 identifies the joint element 32 as a first joint element from the patch element group 30a. Hereinafter, processing for the joint element 32 will be described mainly as an example. The processing unit 12 is also able to perform the same processing for the joint element 34 as for the joint element 32.

The processing unit 12 performs an optimization process for optimizing an application order of CNOT gates for syndrome measurement circuits in the first joint element with respect to the direction of a logical operator defined for the first joint element. For example, the processing unit 12 performs the optimization process as follows.

As an example, the joint element 32 includes 16 physical qubits arranged in a 4×4 lattice. In FIG. 1, each white circle arranged in a lattice corresponds to a single physical qubit. In this example, a shaded region having four white circles or two white circles as vertices represents a Z stabilizer. A white region having four white circles or two white circles as vertices represents an X stabilizer. A Z syndrome measurement circuit is associated with each of the plurality of Z stabilizers. An X syndrome measurement circuit is associated with each of the plurality of X stabilizers.

The joint element 32 is a two-way joint that is connected to two other patch elements on the left side and the lower side of the joint element 32 as viewed in the drawing. That is, the joint element 32 is connected to two other patch elements along the horizontal and vertical directions in FIG. 1. The horizontal direction and the vertical direction in FIG. 1 correspond to two orthogonal directions. A minimum-weight logical operator is defined at a connection boundary in a patch element. A connection boundary in a patch element is a boundary at which the patch element connects to another patch element. A connection boundary in a patch element may also be considered to be a boundary at which the patch element is connected to another patch element. Further, a logical operator is deformable by applying stabilizer operators thereto. Therefore, the processing unit 12 identifies a minimum-weight logical Z operator for the joint element 32 as follows.

First, the processing unit 12 identifies a logical operator 32a corresponding to a first connection boundary of the joint element 32. The processing unit 12 identifies logical operators 32b and 32c by sequentially applying stabilizer operators to the logical operator 32a. In this example, a logical Z operator is considered. The stabilizer operators used for deforming the logical Z operator are Z stabilizers. All of the logical operators 32a, 32b, and 32c are minimum-weight logical Z operators. The processing unit 12 detects that applying a stabilizer operator to the logical operator 32c increases the weight of the logical operator. Therefore, the processing unit 12 ends the deformation of the logical operator starting from the logical operator 32a.

Next, the processing unit 12 identifies a logical operator 32d corresponding to a second connection boundary of the joint element 32. The processing unit 12 identifies logical operators 32e and 32f by sequentially applying stabilizer operators to the logical operator 32d. All of the logical operators 32d, 32e, and 32f are minimum-weight logical Z operators. The processing unit 12 detects that applying a stabilizer operator to the logical operator 32f increases the weight of the logical operator. Therefore, the processing unit 12 ends the deformation of the logical operator starting from the logical operator 32d.

Through the above process, the processing unit 12 identifies the minimum-weight logical operators 32a to 32f for the joint element 32. The processing unit 12 identifies locations where hook errors are prohibited, on the basis of the structures of the logical operators 32a to 32f. A Location where hook errors are prohibited is identified as a side along which a logical operator extends. More specifically, among the logical operators 32a to 32f, the processing unit 12 sets portions extending along the directions of the sides of the lattice as locations where hook errors are prohibited.

For example, the logical operators 32a and 32d entirely extend along the directions of the sides of the lattice. Therefore, the processing unit 12 identifies the sides corresponding to the logical operators 32a and 32d as locations where hook errors are prohibited.

In the logical operator 32b, the vertical portion of the logical operator 32b extends along the direction of a side of the lattice. Therefore, the processing unit 12 identifies the vertical portion of the logical operator 32b as a location where hook errors are prohibited. In the logical operator 32e, the horizontal portion of the logical operator 32e extends along the direction of a side of the lattice. Therefore, the processing unit 12 identifies the horizontal portion of the logical operator 32e as a location where hook errors are prohibited.

The logical operators 32c and 32f entirely extend along a diagonal direction of the lattice. That is, the logical operators 32c and 32f include no portion extending along the directions of the sides of the lattice. Therefore, the processing unit 12 does not identify any portion where hook errors are prohibited, from the logical operators 32c and 32f.

The processing unit 12 generates, for each location where hook errors are prohibited, an optimization problem for optimizing an application order of CNOT gates such that a direction corresponding to the application order of CNOT gates is orthogonal to the direction of a side representing that location.

For example, the processing unit 12 may formulate the optimization problem using an Ising model. The processing unit 12 may formulate the optimization problem as Quadratic Unconstrained Binary Optimization (QUBO).

In one example, the processing unit 12 represents a first application order orthogonal to a vertical side and a second application order orthogonal to a horizontal side, using a binary variable σᵢ that takes a value of -1 or +1, and associates the binary variable σᵢ with a Z syndrome measurement circuit i. The first application order corresponds to an order in which CNOT gates are applied to the upper-right, lower-right, upper-left, and lower-left physical qubits arranged at the four vertices of a square. The second application order corresponds to an order in which CNOT gates are applied to the upper-right, upper-left, lower-right, and lower-left physical qubits arranged at the four vertices. An N-shaped arrow in FIG. 1 indicates the first application order. An arrow having a shape obtained by horizontally reversing the letter "Z" in FIG. 1 indicates the second application order. For example, the processing unit 12 is able to formulate the optimization problem as a problem of minimizing an Ising-type objective function H = H({σᵢ}). The objective function H is expressed by Expression (1). $H \left(\left\{{σ}_{i}\right\}\right) = {\sum }_{i > j} {J}_{ij} {σ}_{i} {σ}_{j} + {\sum }_{i = 1}^{N} {h}_{i} {σ}_{i}$ (1)

Possible values of σᵢ and the index i are given by Expression (2). ${σ}_{i} ∈ \left\{-1,1\right\} , i = 1 , ⋯ , N$ (2)

N denotes the total number of Z stabilizers included in the joint element 32. N may also be considered to denote the total number of Z syndrome measurement circuits included in the joint element 32. Jᵢⱼ is a constant given to a pair of i and j. hᵢ is a constant given to i. The processing unit 12 is able to solve the optimization problem formulated by Expression (1), using an optimization algorithm such as quantum annealing or simulated annealing. The processing unit 12 is also able to use other optimization algorithms.

Here, with respect to a region outside a connection boundary of the joint element 32, the processing unit 12 fixes the application order to an application order orthogonal to a direction of a logical Z operator defined for a linear element, so that ensure consistency with a connection to the linear element. In addition, in this example, as described above, the processing unit 12 is able to fix an application order of CNOT gates for X syndrome measurement circuits. For example, the processing unit 12 fixes the application order of CNOT gates to the second application order for the X syndrome measurement circuits.

In FIG. 1, N-shaped arrows and arrows having a shape obtained by horizontally reversing the letter "Z" described in the Z stabilizers indicate an example of a result of the optimization process.

Measurements of Z syndromes by Z syndrome measurement circuits and measurements of X syndromes by X syndrome measurement circuits are performed in parallel. If the Z syndromes and the X syndromes are measured using the above result of solving the optimization problem without modification, a phenomenon may occur in which two syndrome measurement circuits simultaneously apply CNOT gates to the same physical qubit. This phenomenon is hereinafter called a "collision". To avoid this, the processing unit 12 may perform a process for resolving the collision on the result of solving the optimization problem. The process for resolving a collision is hereinafter called collision resolution. For example, the processing unit 12 is able to resolve the collision by increasing the depth of a syndrome measurement circuit around the physical qubit where the collision occurs from 4 to 5.

The processing unit 12 generates optimal circuit information 11a based on the above result of the optimization process. The processing unit 12 stores the optimal circuit information 11a in the storage unit 11. The optimal circuit information 11a is information that holds an application order of CNOT gates obtained as a result of the optimization process in association with a corresponding first joint element. In the case where a collision is resolved, the application order of CNOT gates is the one obtained as a result of the collision resolution. For example, the optimal circuit information 11a holds the joint element 32 in association with an application order of CNOT gates optimized for the joint element 32. For example, the processing unit 12 registers information on the joint element 32 and information on the application order of CNOT gates optimized for the joint element 32 in association with each other in the optimal circuit information 11a.

In addition, the processing unit 12 may acquire an application order of CNOT gates through the optimization process for the joint element 34. The processing unit 12 may register the application order of CNOT gates obtained for the joint element 34 in association with the joint element 34 in the optimal circuit information 11a.

In this way, the processing unit 12 generates in advance the optimal circuit information 11a indicating optimal procedures for applying CNOT gates for joint elements among a plurality of patch elements included in a patch that may be handled in lattice surgery, and stores the optimal circuit information 11a in the storage unit 11.

Thereafter, arbitrary quantum computation using lattice surgery is performed by the quantum computer 20. The quantum computation may be the same as or different from quantum computation in which the patch 30 appears. The processing unit 12 detects that a second patch appears in the lattice surgery while the quantum computer 20 executes the lattice surgery. For example, the processing unit 12 acquires a Pauli measurement execution instruction for a plurality of logical qubits related to the quantum computation during execution of lattice surgery. The processing unit 12 may detect the second patch based on the Pauli measurement execution instruction. The second patch is created by merging a plurality of patches or deforming a patch, and is decomposable into a second patch element group.

The processing unit 12 identifies a second joint element corresponding to the first joint element from the second patch element group included in the second patch. Here, a patch 40 is an example of the second patch. The processing unit 12 decomposes the patch 40 into a patch element group 40a. The patch element group 40a is an example of the second patch element group.

The processing unit 12 classifies each patch element included in the patch element group 40a into a linear element or a joint element. For example, the patch element group 40a includes linear elements 41 and 43 and joint elements 42 and 44.

The joint element 42 has the same structure as the joint element 32. Specifically, the joint element 42 is formed of physical qubits arranged in 4 × 4. Also, the joint element 42 is a two-way joint that is connected to other patch elements on the left side and lower side of the joint element 42. Therefore, the processing unit 12 determines that the joint element 42 corresponds to the joint element 32. The joint element 42 is an example of the second joint element.

The processing unit 12 assigns, based on the optimal circuit information 11a, the application order of CNOT gates associated with the first joint element to the second joint element. For example, the processing unit 12 acquires the application order of CNOT gates associated with the joint element 32 based on the optimal circuit information 11a, and assigns the application order of CNOT gates to the joint element 42.

Note that an appropriate application order of CNOT gates for each linear element 41 and 43 is readily determined. Therefore, the processing unit 12 is able to assign a predetermined application order to the linear elements 41 and 43. The joint element 44 is obtained by vertically reversing the joint element 42. For example, the processing unit 12 is able to determine in advance an application order of CNOT gates for a joint element having the same structure as the joint element 44 by performing the optimization process, and register the application order in the optimal circuit information 11a. By doing so, the processing unit 12 is also able to assign the application order of CNOT gates to the joint element 44 based on the optimal circuit information 11a.

The processing unit 12 integrates the application orders of CNOT gates for the linear elements 41 and 43 and the joint elements 42 and 44 to thereby generate circuit schedule information for the entire patch 40, which indicates the application order of CNOT gates for each syndrome measurement circuit. The processing unit 12 transmits a quantum operation instruction including the circuit schedule information to the quantum computer 20 and causes the quantum computer 20 to execute syndrome measurements based on the circuit schedule information. The quantum computer 20 performs quantum error correction based on the result of the syndrome measurements for the patch 40.

As described above, with the information processing apparatus 10, a first joint element is identified from a first patch element group included in a first patch that appears in the course of lattice surgery. The first joint element is a patch element that is connected to two or more other patch elements along two orthogonal directions. The optimization process is performed to optimize an application order of CNOT gates for a syndrome measurement circuit in the first joint element, with respect to the direction of a logical operator defined for the first joint element. The optimal circuit information 11a that associates the application order of CNOT gates obtained as a result of the optimization process with the first joint element is stored in the storage unit 11. In the case where it is detected during execution of lattice surgery that a second patch appears in the course of lattice surgery, a second joint element that is a patch element corresponding to the first joint element is identified from a second patch element group included in the second patch. Based on the optimal circuit information 11a, the application order of CNOT gates associated with the first joint element is assigned to the second joint element. Accordingly, the information processing apparatus 10 is able to accelerate the determination of the application order of CNOT gates. As a result, the information processing apparatus 10 is able to accelerate quantum computation by lattice surgery.

By generating the optimal circuit information 11a in advance, the information processing apparatus 10 is able to determine an application order of CNOT gates for each patch element based on the optimal circuit information 11a. Therefore, even if a patch having a complex shape appears during execution of lattice surgery, the information processing apparatus 10 is able to determine an application order of CNOT gates for the patch at high speed. The information processing apparatus 10 is able to promptly provide the quantum computer 20 with the application order of CNOT gates, thereby reducing a delay associated with the determination of the application order of CNOT gates. The information processing apparatus 10 is able to support the quantum computer 20 so that syndrome measurements are performed at high speed.

In addition, by decomposing a patch into patch elements, the information processing apparatus 10 is able to reduce the targets of the optimization process to a per-patch-element basis. Therefore, the information processing apparatus 10 is able to reduce the size of a target region for the optimization compared to the case where the optimization process is performed on the entire patch, and is able to suppress the calculation cost of the optimization process. Also, the number of shape types of joint elements that are subject to the optimization process is relatively small. Therefore, the information processing apparatus 10 only needs to perform the optimization process for a relatively small number of joint elements. Therefore, the information processing apparatus 10 is able to efficiently perform the optimization process.

In addition, the information processing apparatus 10 optimizes an application order of CNOT gates for each joint element, thereby making it easy to reuse the optimization results for other patches. That is, the information processing apparatus 10 is able to increase the reusability of the optimization results. For example, once the information processing apparatus 10 performs the optimization at the time of compilation or the like, the information processing apparatus 10 is able to reuse the optimization result for patches having arbitrary shapes. Each joint element is independent of other joint elements. Therefore, the information processing apparatus 10 is able to perform the optimization process in parallel for a plurality of optimization target joint elements.

Furthermore, the information processing apparatus 10 determines an application order of CNOT gates for the second joint element based on the optimal circuit information 11a, thereby making it possible to improve the hook error tolerance in syndrome measurements performed by the quantum computer 20. Thus, the information processing apparatus 10 is able to reduce the logical error rate in quantum computation.

### [Second Embodiment]

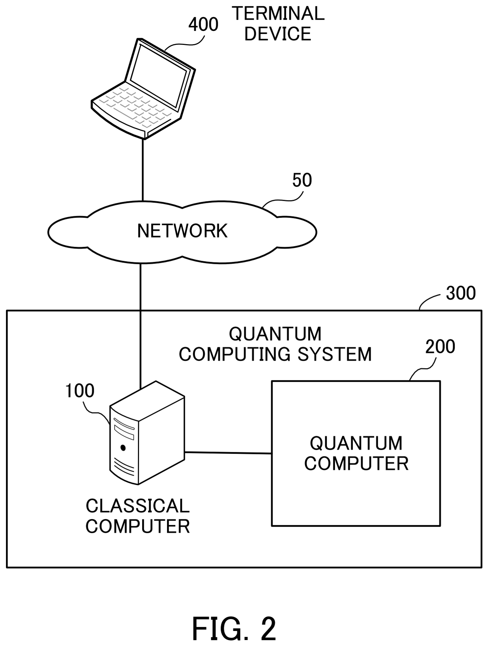

FIG. 2 illustrates an example of a quantum computing system according to a second embodiment. A quantum computing system 300 includes a classical computer 100 and a quantum computer 200. The classical computer 100 is also called a von Neumann computer.

A terminal device 400 is connected to the classical computer 100 via a network 50. The terminal device 400 is a computer used by a user who requests quantum computation to be performed by the quantum computing system 300. The classical computer 100 may receive information indicating a quantum circuit from the terminal device 400. The quantum circuit represents an order of operations on qubits according to the arrangement of elements such as gates. A qubit is a bit capable of representing a superposition state of the "0" state and the "1" state.

The classical computer 100 instructs the quantum computer 200 to control qubits according to a quantum circuit. The classical computer 100 also acquires a measurement result of each qubit from the quantum computer 200. The classical computer 100 is an example of the information processing apparatus 10 of the first embodiment.

The quantum computer 200 includes a plurality of qubits and a device for manipulating each of the plurality of qubits. The plurality of qubits included in the quantum computer 200 are implemented by, for example, a superconducting qubit device. The qubits may be implemented by another type of qubit device such as a trapped-ion qubit device.

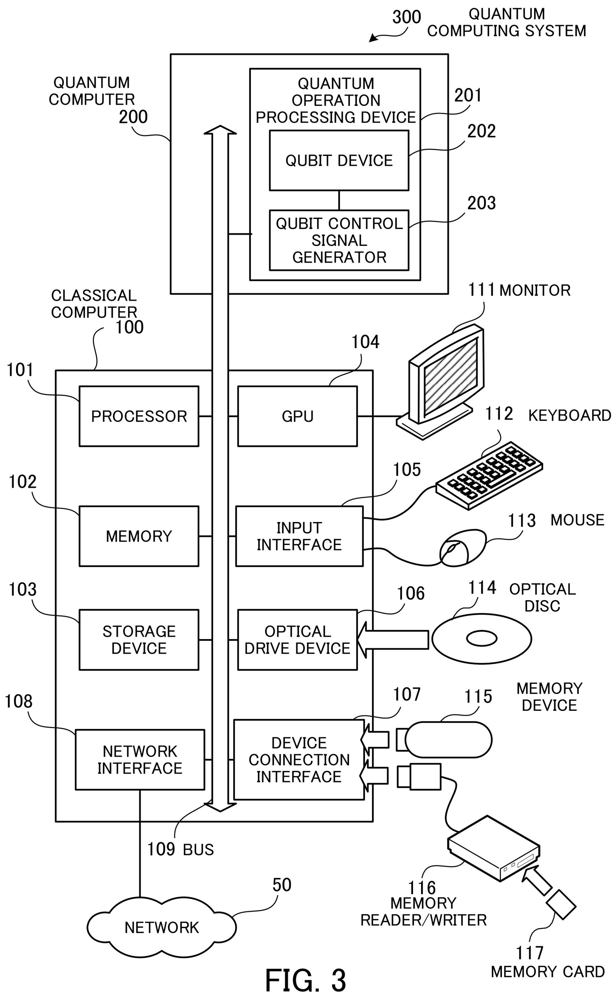

FIG. 3 illustrates an example of hardware of the quantum computing system. The classical computer 100 is entirely controlled by a processor 101. A memory 102 and a plurality of peripheral devices are connected to the processor 101 via a bus 109. The processor 101 may be a multiprocessor. The processor 101 is, for example, a CPU, a micro processing unit (MPU), or a DSP. At least a part of the functions implemented by the processor 101 executing a program may be implemented by an electronic circuit such as an ASIC or a programmable logic device (PLD). A processor that performs a certain process among a plurality of processes performed by the classical computer 100 may be different from a processor that performs a process different from the certain process among the plurality of processes. At least some of the processes described below may be performed in parallel using a plurality of processors or processor cores. The processor 101 may be referred to as "processor circuitry". The processor 101 is an example of the processing unit 12 of the first embodiment.

The memory 102 is a main storage device of the classical computer 100. The memory 102 temporarily stores at least part of an operating system (OS) program and application programs to be executed by the processor 101. The memory 102 also stores various data used by the processor 101 during its operation. As the memory 102, for example, a volatile semiconductor storage device such as a RAM is used.

Peripheral devices are connected to the bus 109. The peripheral devices are, for example, a storage device 103, a GPU 104, an input interface 105, an optical drive device 106, a device connection interface 107, and a network interface 108.

The storage device 103 electrically or magnetically writes and reads data to and from a built-in storage medium. The storage device 103 is an auxiliary storage device of the classical computer 100. The storage device 103 stores OS programs, application programs, and various data. As the storage device 103, for example, an HDD or a solid state drive (SSD) is used. The memory 102 and the storage device 103 are examples of the storage unit 11 of the first embodiment.

The GPU 104 is an arithmetic device that performs image processing. The GPU 104 is an example of a graphic controller. A monitor 111 is connected to the GPU 104. The GPU 104 displays images on the screen of the monitor 111 in accordance with instructions from the processor 101. Examples of the monitor 111 include a display device using organic electro luminescence (EL) and a liquid crystal display device.

A keyboard 112 and a mouse 113 are connected to the input interface 105. The input interface 105 transmits signals sent from the keyboard 112 and the mouse 113 to the processor 101. The mouse 113 is an example of a pointing device, and other pointing devices may be used. Examples of other pointing devices include a touch panel, a tablet, a touch pad, and a track ball.

The optical drive device 106 reads data recorded on an optical disc 114 or writes data to the optical disc 114 using laser light or the like. The optical disc 114 is a portable storage medium on which data is recorded so as to be readable by reflection of light. The optical disc 114 may be a digital versatile disc (DVD), a DVD-RAM, a compact disc read only memory (CD-ROM), a CD-recordable (CD-R), a CD-rewritable (CD-RW), or similar media.

The device connection interface 107 is a communication interface for connecting peripheral devices to the classical computer 100. For example, a memory device 115 and a memory reader/writer 116 may be connected to the device connection interface 107. The memory device 115 is a storage medium having a function of communicating with the device connection interface 107. The memory reader/writer 116 is a device that writes data to a memory card 117 or reads data from the memory card 117. The memory card 117 is a card-type storage medium.

The network interface 108 is connected to the network 50. The network interface 108 transmits and receives data to and from other computers or communication devices via the network 50. The network interface 108 is a wired communication interface connected to a wired communication device such as a switch or a router via a cable. Alternatively, the network interface 108 may be a wireless communication interface that wirelessly communicates with a wireless communication device such as a base station or an access point.

The quantum computer 200 shares the bus 109 with the classical computer 100. The quantum computer 200 is able to communicate information with each element of the classical computer 100 via the bus 109.

The quantum computer 200 includes a quantum operation processing device 201 connected to the bus 109. The quantum operation processing device 201 performs gate operations on qubits according to quantum gates included in a quantum circuit, and measures the states of the qubits. The quantum operation processing device 201 includes a qubit device 202 and a qubit control signal generator 203. The qubit device 202 holds the states of a plurality of qubits and performs gate operations on these qubits. The qubit control signal generator 203 generates control signals for instructing gate operations or measurements of the qubits.

With the hardware described above, the quantum computing system 300 is able to implement the processing functions of the second embodiment. The information processing apparatus 10 and the quantum computer 20 described in the first embodiment may also be implemented with hardware similar to that of the quantum computing system 300 illustrated in FIG. 3.

The classical computer 100 implements the processing functions of the second embodiment by executing a program recorded on a computer-readable storage medium, for example. The program describing the processing contents to be executed by the classical computer 100 may be recorded on various storage media. For example, a program to be executed by the classical computer 100 may be stored in the storage device 103. The processor 101 loads at least a part of the program from the storage device 103 into the memory 102 and executes the program. The program to be executed by the classical computer 100 may be recorded on a portable storage medium such as the optical disc 114, the memory device 115, or the memory card 117. The program stored in the portable storage medium becomes executable after being installed in the storage device 103 under the control of the processor 101, for example. Alternatively, the processor 101 may execute the program while reading the program directly from the portable storage medium.

The program for implementing the processing functions of the first or second embodiment may be referred to as a quantum computation support program. The processing method of the first or second embodiment executed by the classical computer 100 may be referred to as a quantum computation support method.

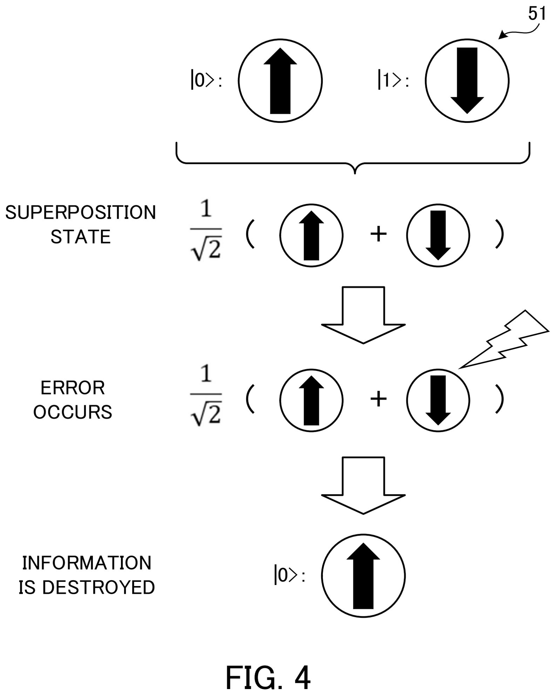

FIG. 4 illustrates characteristics of a qubit. A qubit 51 is the minimum unit of information in the quantum computer 200. The qubit 51 is able to take the state |0〉 and the state |1〉. The qubit 51 is also able to take a superposition state of the state |0〉 and the state |1〉. In the superposition state, the measured value of the qubit 51 is probabilistically determined to be |0〉 or |1〉. For example, in the case where the states of |0〉 and |1〉 have equal probabilities, the superposition state of the qubit 51 is expressed as "2 ^{(-1/2)}(|0〉 + |1〉)".

Such information of the qubit 51 is destroyed due to interactions with the environment, operational errors, and other factors. That is, an error occurs in the qubit 51. For example, if the superposition state is destroyed by an error, the state of the qubit 51 collapses to a state such as |0〉. In order to improve the computational accuracy, it is demanded to detect qubits with errors and correct the states of the qubits to their correct states.

To meet this demand, a technique called quantum error correction has been proposed. In the quantum error correction, a plurality of qubits are encoded in combination. When encoding is performed, the states of one or more logical qubits are represented by a plurality of physical qubits used for the encoding. Physical qubits in which errors have occurred are detected and corrected based on the collective state of the plurality of physical qubits used for the encoding.

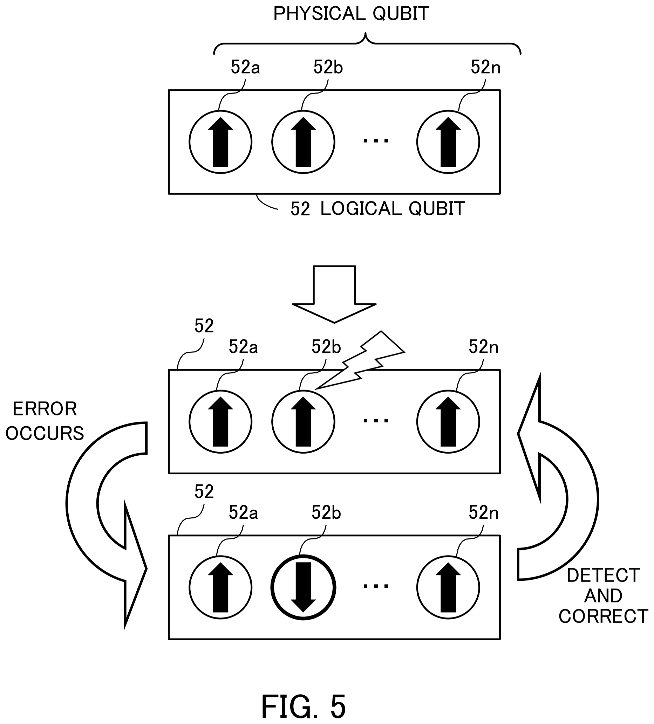

FIG. 5 illustrates an example of the quantum error correction. For example, a single logical qubit 52 is defined by physical qubits 52a, 52b, ···, and 52n. In the example of FIG. 5, assume that, in the state where all the physical qubits 52a, 52b, ···, and 52n are in the state of |0〉, an error occurs and the physical qubit 52b is flipped to the state of |1〉. In this case, the error is detected based on information obtained from each of the physical qubits 52a, 52b, ···, and 52n. Then, the physical qubit 52b in which the error has occurred is identified, and the state of the physical qubit 52b is corrected.

By appropriately performing the quantum error correction in this way, even if errors occur in physical qubits, the logical qubit 52 is able to maintain the correct state, as long as the number of errors is within an error correction capability. Quantum computation involving such quantum error correction for logical qubits is achieved by executing a combination of predetermined basic gates.

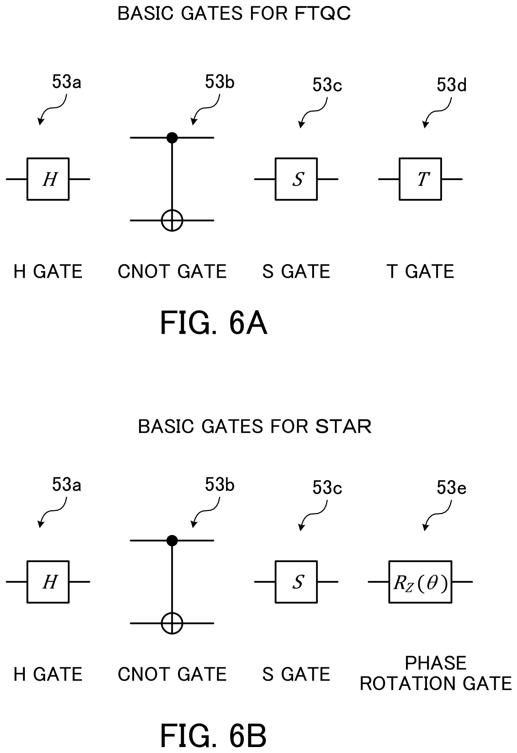

FIGS. 6A and 6B illustrate examples of basic gates used in fault-tolerant quantum computation. FIG. 6A illustrates basic gates for FTQC. The basic gates used in quantum computation involving quantum error correction are an H gate 53a, a CNOT gate 53b, an S gate 53c, and a T gate 53d. The H gate 53a is called a Hadamard gate. The H gate 53a is a quantum gate that rotates the state by 180 degrees about an axis that is 45 degrees between the Z axis and the X axis. The CNOT gate 53b is a quantum gate that keeps the state of the target bit unchanged if the control bit is in the state of 10), and flips the state of the target bit if the control bit is in the state of |1〉. "Flip" refers to change the state from |0〉 to |1〉 or from |1〉 to 10). The S gate 53c is a quantum gate that rotates the state by π/2 about the Z axis. The T gate 53d is a quantum gate that rotates the state by π/4 about the Z axis.

Among these gates, the H gate, the CNOT gate, and the S gate are called Clifford operators. In contrast, the T gate is called a non-Clifford operator. These basic gates illustrated in FIG. 6A are collectively referred to as Clifford+T gates. The Clifford+T gates in the computation by the quantum computer 200 correspond to AND, XOR, and NOT gates in the classical computer 100. That is, it is possible to execute any quantum computation by combining the Clifford+T quantum gates.

FIG. 6B illustrates basic gates for a space-time efficient analog rotation quantum computing architecture. The space-time efficient analog rotation quantum computing architecture is also referred to as a space-time efficient analog rotation (STAR) architecture. The basic gates for the STAR architecture are an H gate 53a, a CNOT gate 53b, an S gate 53c, and a phase rotation gate 53e (= R_{z}(θ) gate). That is, in the STAR architecture, the phase rotation gate 53e is used as a basic gate instead of the T gate 53d in the Clifford+T gates.

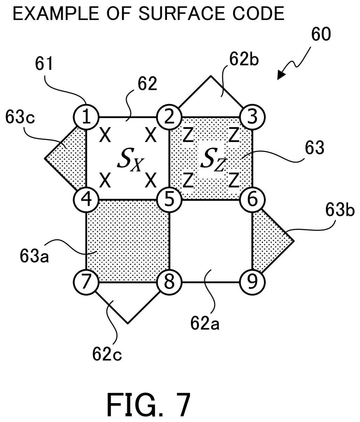

FIG. 7 illustrates an example of a surface code. In encoding with a surface code, a logical qubit is encoded using a plurality of qubits arranged in a lattice. A surface code 60 is a surface code with a code distance of "3". The surface code 60 is formed of nine physical qubits. The physical qubits are indicated by white circles at vertices of the lattice. A physical qubit 61 is one of the nine physical qubits. Numbers 1 to 9 in the white circles are the identification numbers of the physical qubits.

A logical qubit is a simultaneous eigenstate of all stabilizer operators defined on a lattice plane, in which each stabilizer has an eigenvalue of "+1". White regions of the surface code 60 are X stabilizers. In the surface code 60, four X stabilizers 62, 62a, 62b, and 62c are defined. Shaded regions of the surface code 60 are Z stabilizers. In the surface code 60, four Z stabilizers 63, 63a, 63b, and 63c are defined.

The surface code 60 includes nine qubits and eight stabilizer operators. Therefore, a logical degree of freedom of the surface code 60 is 9 - 8 = 1. Any computation is performed on the logical qubit by using the above-described basic gates of the Clifford+T or the above-described basic logical gates of the STAR architecture.

Here, even if a stabilizer operator is applied to an encoded logical qubit, the logical qubit is not destroyed. For example, let |ψ〉_{L} denote a state of a logical qubit.

An X stabilizer 62 is represented as S_{X} = X₁X₂X₄X₅. Xᵢ is a Pauli X operator corresponding to the i-th physical qubit. In this case, S_{X}|ψ〉_{L} = |ψ〉_{L}.

A Z stabilizer 63 is represented as S_{Z} = Z₂Z₃Z₅Z₆. Zᵢ is a Pauli Z operator corresponding to the i-th physical qubit. In this case, S_{Z}|ψ〉_{L} = |ψ〉_{L}.

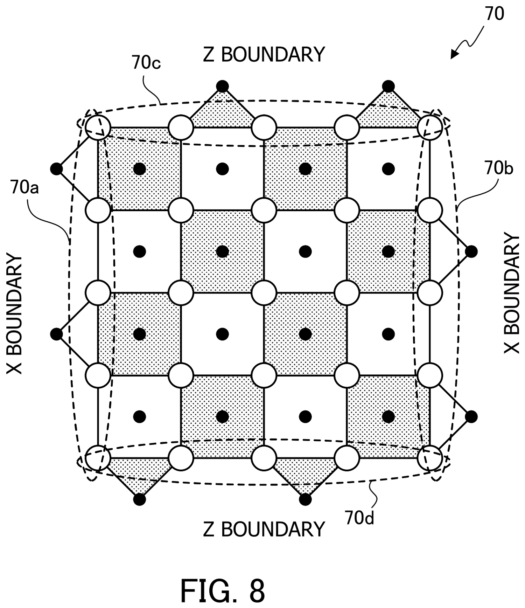

FIG. 8 illustrates an example of boundaries defined in a surface code. Boundaries are defined in a surface code. A boundary where X stabilizers are arranged is referred to as an X boundary. A boundary where Z stabilizers are arranged is referred to as a Z boundary. Each boundary may be referred to by other names. FIG. 8 illustrates a surface code 70 with a code distance of 5. The surface code 70 has X boundaries 70a and 70b and Z boundaries 70c and 70d. Black circles illustrated in the surface code 70 represent ancilla qubits used for syndrome measurement.

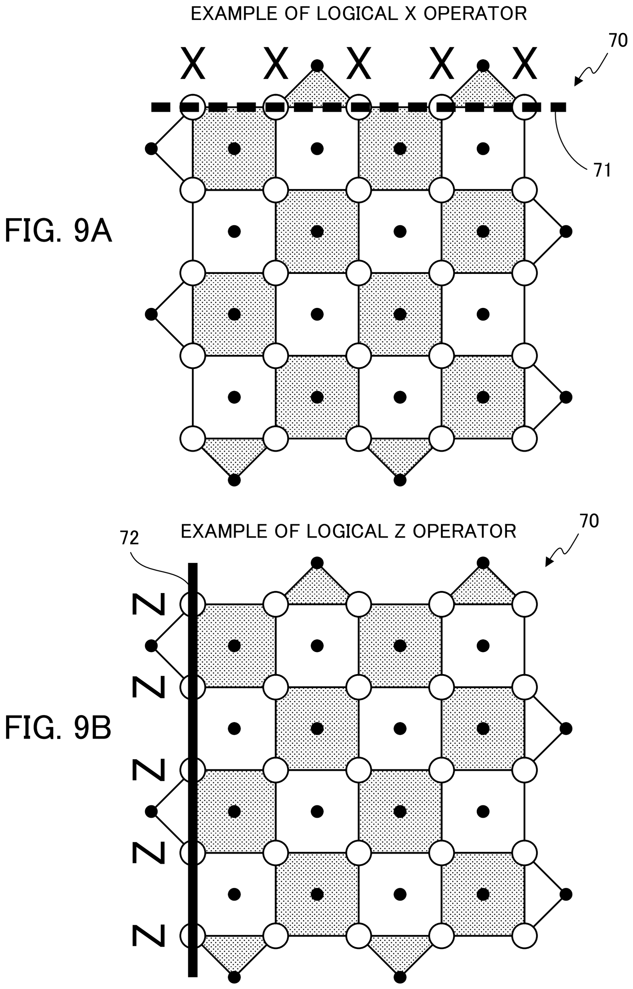

FIGS. 9A and 9B illustrate examples of logical operators. A logical X operator is defined as a tensor product of Pauli X operators connecting disconnected X boundaries in a surface code. FIG. 9A illustrates a logical X operator 71 in the surface code 70. In the figure, the logical X operator 71 is illustrated as a dotted path connecting two X boundaries. The logical X operator 71 includes five Pauli X operators. The path may be referred to as a route or may be simply referred to as a line.

A logical Z operator is defined as a tensor product of Pauli Z operators connecting disconnected Z boundaries in a surface code. FIG. 9B illustrates a logical Z operator 72 in the surface code 70. In the figure, the logical Z operator 72 is illustrated as a solid path connecting two Z boundaries. The logical Z operator 72 includes five Pauli Z operators.

The length of the shortest logical operator corresponds to a code distance. The length of a logical operator corresponds to the number of Pauli operators included in the logical operator. The logical X operator 71 is the shortest logical X operator in the surface code 70. The logical Z operator 72 is the shortest logical Z operator in the surface code 70. The code distance of the surface code 70 is 5.

A logical operator is freely deformed by applying stabilizer operators thereto.

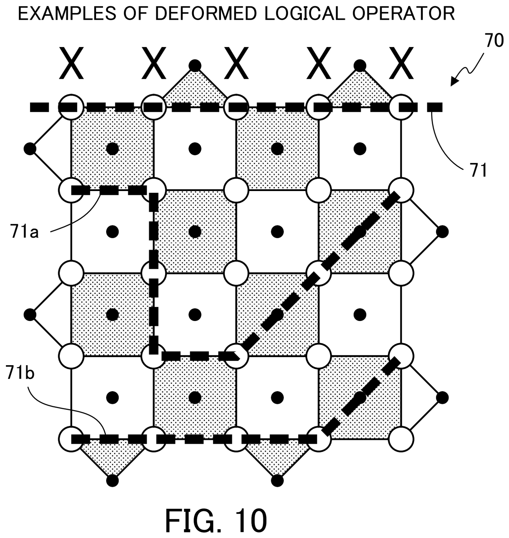

FIG. 10 illustrates examples of a deformed logical operator. For example, by applying several X stabilizers to the logical X operator 71, the logical X operator 71 is deformed into a logical X operator 71a. By further applying X stabilizers to the logical X operator 71a, the logical X operator 71a is deformed into a logical X operator 71b.

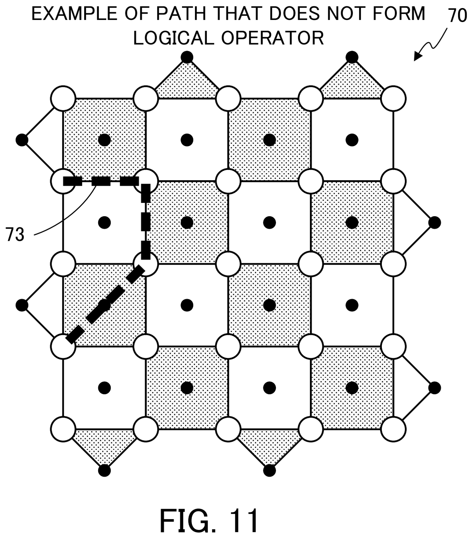

FIG. 11 illustrates an example of a path that does not form a logical operator. A path that starts from a certain boundary and returns to the same boundary does not form a logical operator. For example, an operator 73 is represented by a path that starts from a physical qubit on one X boundary of the surface code 70 and ends at another physical qubit on the same X boundary. Even if an X stabilizer is applied to the operator 73, the operator 73 becomes equivalent to a state where no operator is applied. The operator 73 may also be considered to be equivalent to an X stabilizer. Therefore, the operator 73 does not form a logical X operator.

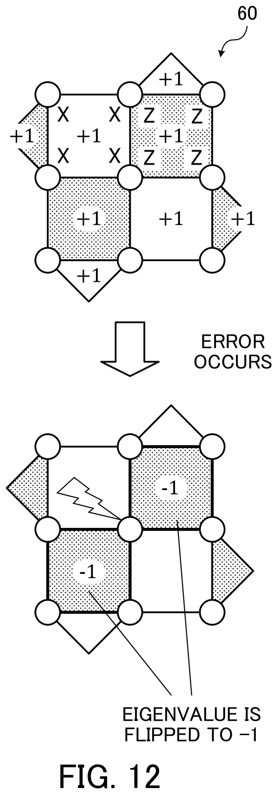

FIG. 12 illustrates an example of error detection by syndrome measurements. FIG. 12 illustrates the surface code 60 as an example. An error occurring in a physical qubit included in the surface code 60 is detected by measuring eigenvalues of stabilizer operators. An eigenvalue of a stabilizer operator is called a syndrome. The measurement of a syndrome is called a syndrome measurement. In a state without errors, all syndrome values are "+1".

When an error occurs in any physical qubit, the eigenvalues of stabilizer operators around the physical qubit are flipped. For example, in the case where an X error occurs in the central physical qubit in the surface code 60, the eigenvalues of two Z stabilizers sandwiching the central physical qubit are flipped to "-1". A syndrome measurement is performed using an ancilla qubit.

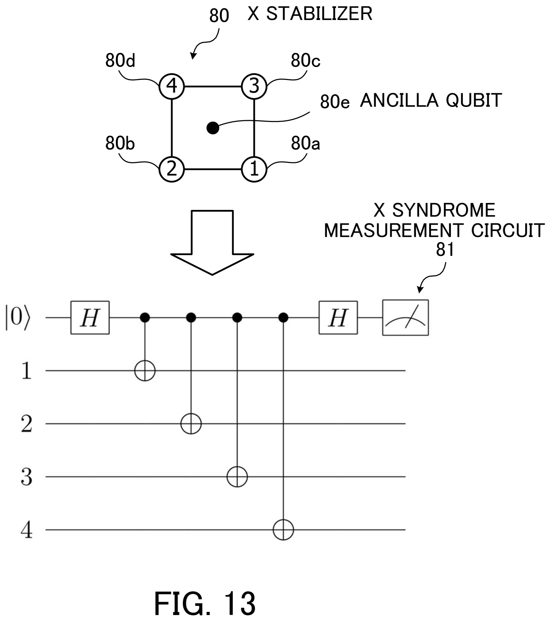

FIG. 13 illustrates an example of an X syndrome measurement. In an X syndrome measurement, physical qubits 80a to 80d included in an X stabilizer 80 and an ancilla qubit 80e are used. The ancilla qubit 80e is used for CNOT gate operations with each of the physical qubits 80a to 80d. An X syndrome measurement circuit 81 is a quantum circuit for X syndrome measurement.

In the X syndrome measurement circuit 81, the ancilla qubit 80e has an initial state of |0〉.First, the gate operation of a Hadamard gate is performed on the ancilla qubit 80e.

Next, the gate operations of four CNOT gates are sequentially performed, using the ancilla qubit 80e as a control bit and each of the physical qubits 80a to 80d as a target bit. Numbers in the physical qubits 80a to 80d indicate an order in which the CNOT gates are applied. Then, the gate operation of a Hadamard gate is performed on the ancilla qubit 80e. Finally, the state of the ancilla qubit 80e is measured.

If an X error occurs in any of the physical qubits 80a to 80d, the state of the ancilla qubit 80e is flipped in the X syndrome measurement circuit 81.

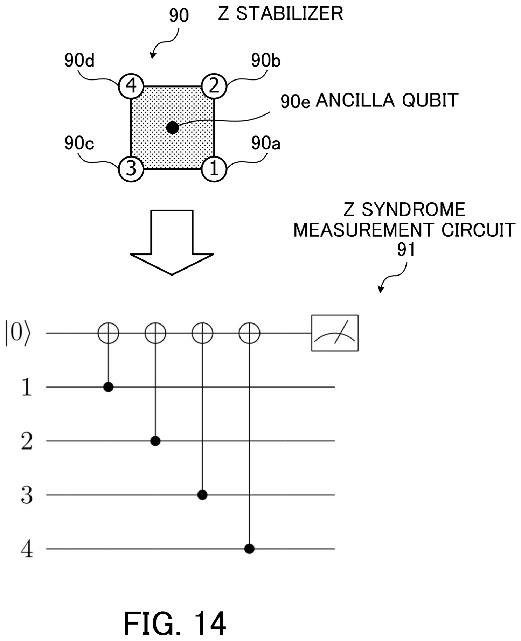

FIG. 14 illustrates an example of a Z syndrome measurement. In a Z syndrome measurement, physical qubits 90a to 90d included in a Z stabilizer 90 and an ancilla qubit 90e are used. The ancilla qubit 90e is used for CNOT gate operations with each of the physical qubits 90a to 90d. A Z syndrome measurement circuit 91 is a quantum circuit for Z syndrome measurement.

In the Z syndrome measurement circuit 91, the ancilla qubit 90e has an initial state of |0〉.Then, the gate operations of four CNOT gates are sequentially performed, using the ancilla qubit 90e as a target bit and each of the physical qubits 90a to 90d as a control bit. Numbers in the physical qubits 90a to 90d indicate an order in which the CNOT gates are applied. Finally, the state of the ancilla qubit 90e is measured.

If a Z error occurs in any of the physical qubits 90a to 90d, the state of the ancilla qubit 90e is flipped in the Z syndrome measurement circuit 91.

The quantum computer 200 performs quantum computation by lattice surgery (LS).

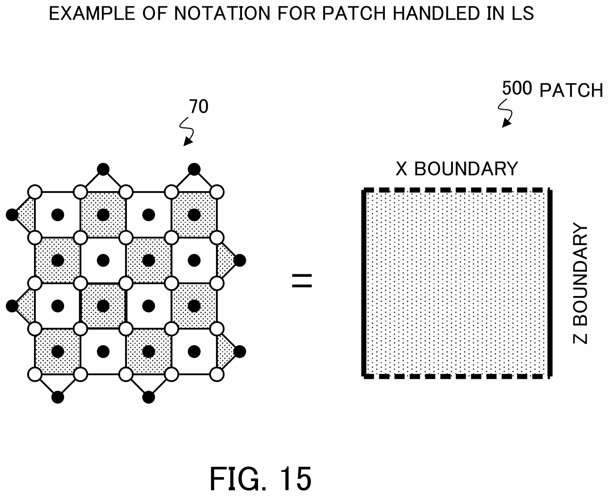

FIG. 15 illustrates an example of a notation for a patch handled in LS. Gate operations of basic logical gates acting on a logical qubit are performed by LS. For example, the surface code 70 is represented by a square patch 500. Dotted edges of the patch 500 indicate X boundaries. Solid edges of the patch 500 indicate Z boundaries. In LS, logical gate operations are performed on a logical qubit by merging a plurality of patches, splitting a patch, and deforming a patch.

Note that a patch may be considered as a group of a plurality of physical qubits forming a logical qubit. Typically, one patch corresponds to one logical qubit. However, in a temporary merged state during LS, one patch may correspond to a plurality of logical qubits.

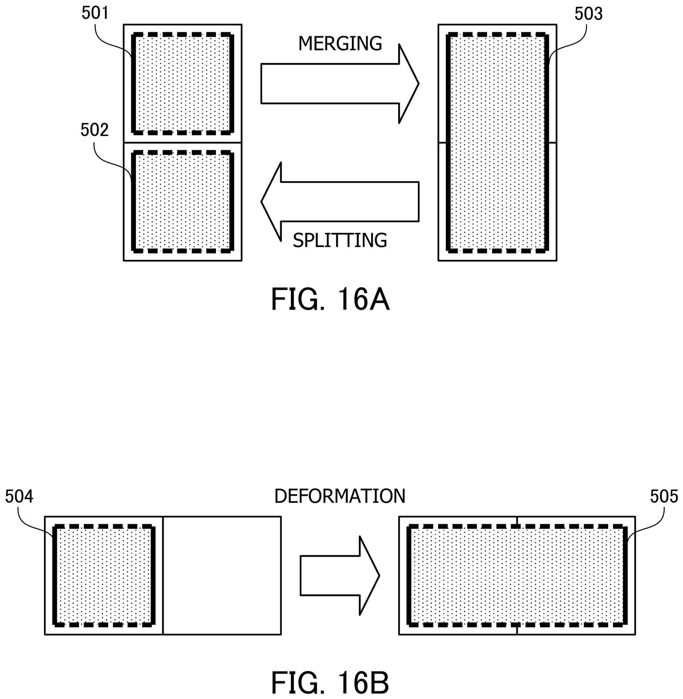

FIGS. 16A and 16B illustrate examples of patch operations in LS. FIG. 16A illustrates merging and splitting in LS. For example, a patch 503 is created by merging patches 501 and 502. The patch 503 is split into the patches 501 and 502. FIG. 16B illustrates deformation in LS. For example, a patch 505 is created by deforming a patch 504.

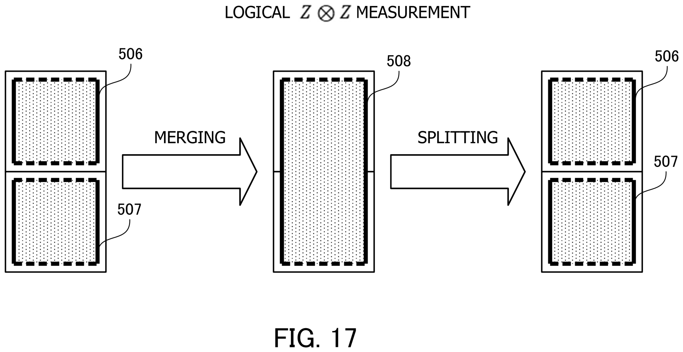

FIG. 17 illustrates an example of patch operations in a logical ZZ measurement by LS. In a logical ZZ measurement by LS, for example, patches 506 and 507 are merged to create a patch 508. Then, the patch 508 is split into patches 506 and 507. Note that the symbol ⊗ in "logical Z ⊗ Z measurement" in the figure denotes a tensor product.

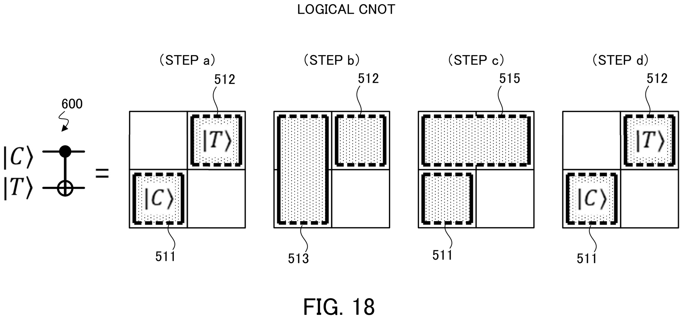

FIG. 18 illustrates an example of patch operations in a logical CNOT operation by LS. A logical CNOT operation is a logical gate operation that applies a CNOT gate 600 between two logical qubits. Here, |C〉 indicates a control bit, and |T〉 indicates a target bit.

First, a patch 511 is arranged in the lower-left region among four regions obtained by 2 × 2 partitioning, and a patch 512 is arranged in the upper-right region (step a). The patch 511 corresponds to a control bit. The patch 512 corresponds to a target bit. Next, the patch 511 is deformed to create a patch 513 (step b).

The patch 513 is split into the patch 511 and a patch arranged in the upper-left region among the four regions, and the latter patch is merged with the patch 512 to create a patch 515 (step c). Finally, the patch 515 is split into the patch 512 and the patch in the upper-left region among the four regions (step d).

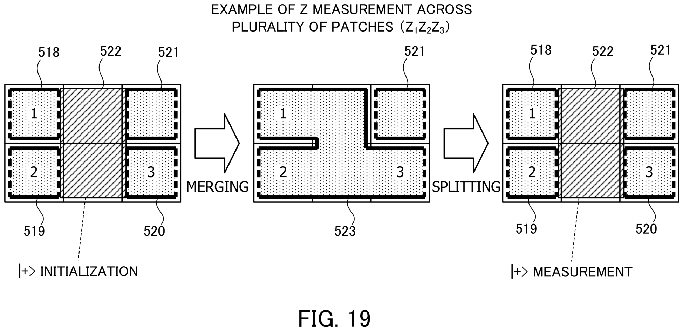

FIG. 19 illustrates an example of a Z measurement across a plurality of patches. For example, patches 518, 519, 520, and 521 are prepared in regions obtained by partitioning of vertical × horizontal = 2 × 3. The patches 518 and 519 are adjacent to each other in the vertical direction. The patches 520 and 521 are adjacent to each other in the vertical direction. An ancilla region 522 is provided between the patches 518 and 519 and the patches 520 and 521. The ancilla region 522 is used as a working region for connection between patches and measurement. In the ancilla region 522, a plurality of physical qubits are arranged to serve as a margin for performing merging or the like in LS. For example, the patch 518 corresponds to a first logical qubit. The patch 519 corresponds to a second logical qubit. The patch 520 corresponds to a third logical qubit. In FIG. 19, a Z₁Z₂Z₃ measurement is illustrated as an example of Z measurement across a plurality of patches. The patch 521 also corresponds to a logical qubit, but is not used for the Z measurement.

First, each physical qubit in the ancilla region 522 is initialized to |+〉. Next, the patches 518, 519, and 520 are merged using the ancilla region 522 to form a patch 523. Thereafter, the patch 523 is split into the patches 518, 519, and 520. Then, a measurement in a predetermined basis is performed on each physical qubit in the ancilla region 522.

As described above, during execution of LS, not only patches having simple shapes illustrated in FIGS. 17 and 18, but also a patch having a complex shape such as the patch 523 may appear.

A plurality of logical qubits needed for quantum computation are arranged in advance in an appropriate arrangement. LS is performed on the plurality of logical qubits arranged in advance.

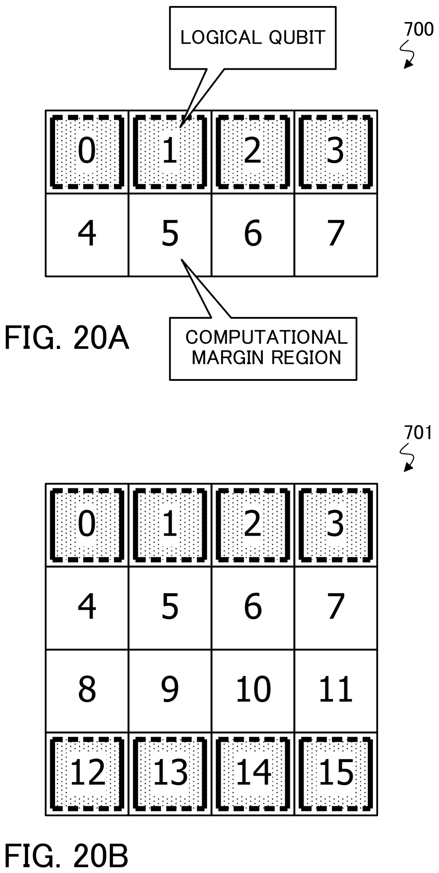

FIGS. 20A and 20B illustrate examples of arrangements of a plurality of patches. FIG. 20A illustrates a patch arrangement 700. The patch arrangement 700 is an example of an arrangement of patches in eight regions obtained by 2 × 4 partitioning. In the example of the patch arrangement 700, one patch corresponding to a logical qubit is arranged in each region "0" to "3" arranged in the horizontal direction. Regions "4" to "7" below the respective regions "0" to "3" are computational margin regions for LS. The computational margin regions correspond to the above-described ancilla region.

FIG. 20B illustrates a patch arrangement 701. The patch arrangement 701 is an example of an arrangement of patches in 16 regions obtained by 4 × 4 partitioning. In the example of the patch arrangement 701, one patch corresponding to a logical qubit is arranged in each region "0" to "3" arranged in the horizontal direction. Regions "4" to "7" below the respective regions "0" to "3" are computational margin regions for LS. Regions "8" to "11" below the respective regions "4" to "7" are computational margin regions for LS. Further, one patch corresponding to a logical qubit is arranged in each of regions "12" to "15" below the respective regions "8" to "11".

In this manner, a plurality of logical qubits needed for quantum computation, that is, a plurality of patches are prepared in advance in the qubit device 202.

In syndrome measurement, hook errors may occur.

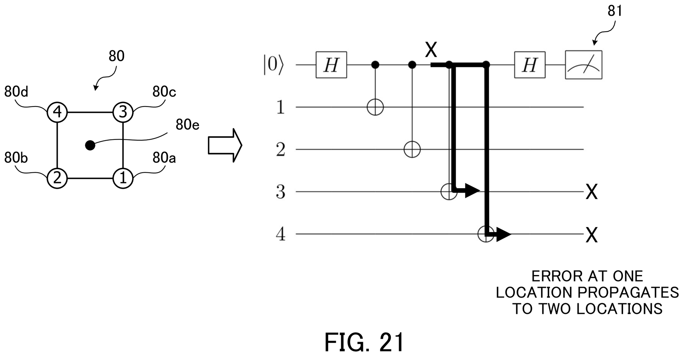

FIG. 21 illustrates an example of a hook error in an X syndrome measurement. Numbers in the X syndrome measurement circuit 81 correspond to an application order of CNOT gates. In the example of the X syndrome measurement circuit 81, CNOT gates are applied to the physical qubits 80a, 80b, 80c, and 80d in the X stabilizer 80 in this order.

If an X error occurs in the ancilla qubit 80e during a measurement of the X syndrome in the X syndrome measurement circuit 81, the X error propagates to a physical qubit for the code via a CNOT gate operation, resulting in a hook error. FIG. 21 illustrates a case where an X error occurs in the ancilla qubit 80e after the application of the second CNOT gate and before the application of the third CNOT gate. In this case, the X error in the ancilla qubit 80e propagates to the physical qubit 80c to which the third CNOT gate is applied and the physical qubit 80d to which the fourth CNOT gate is applied. In this case, the error occurring at one location propagates to two locations.

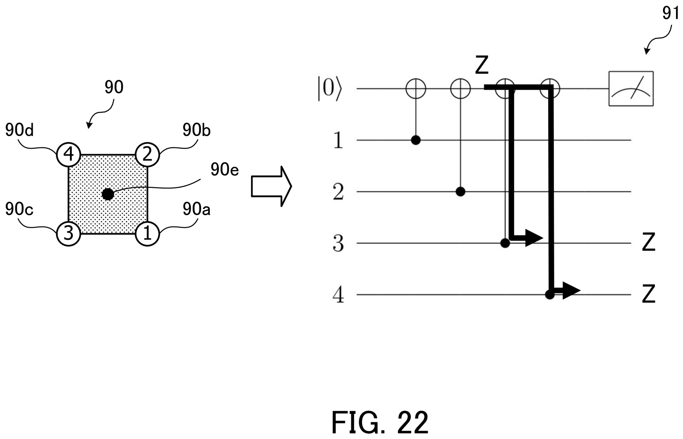

FIG. 22 illustrates an example of a hook error in a Z syndrome measurement. Numbers in the Z syndrome measurement circuit 91 correspond to an application order of CNOT gates. In the example of the Z syndrome measurement circuit 91, CNOT gates are applied to the physical qubits 90a, 90b, 90c, and 90d in the Z stabilizer 90 in this order.

If a Z error occurs in the ancilla qubit 90e during a measurement of the Z syndrome in the Z syndrome measurement circuit 91, the Z error propagates to a physical qubit for the code via a CNOT gate operation, resulting in a hook error. FIG. 22 illustrates a case where a Z error occurs in the ancilla qubit 90e after the application of the second CNOT gate and before the application of the third CNOT gate. In this case, the Z error in the ancilla qubit 90e propagates to the physical qubit 90c to which the third CNOT gate is applied and the physical qubit 90d to which the fourth CNOT gate is applied. In this case, the error occurring at one location propagates to two locations.

In the following description, the "application order of CNOT gates" may be abbreviated as a "CNOT application order".

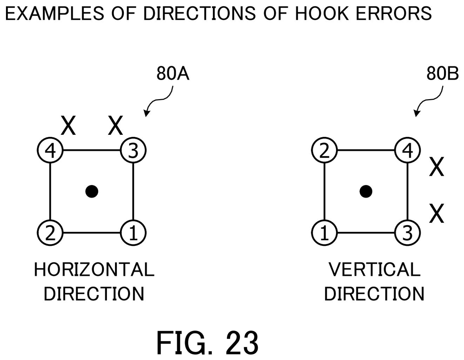

FIG. 23 illustrates examples of directions of hook errors. Directions of hook errors include a horizontal direction and a vertical direction. For example, four physical qubits and one ancilla qubit belong to an X stabilizer 80A. The four physical qubits are arranged at the four vertices of a square. The ancilla qubit is arranged at the center of the square. An X syndrome measurement circuit for the X stabilizer 80A applies CNOT gates to the respective physical qubits arranged at the vertices, in the order of the lower-right vertex, the lower-left vertex, the upper-right vertex, and the upper-left vertex as viewed in the drawing. Then, the order in which an X error occurring in the ancilla qubit propagates to the physical qubits is an order along the horizontal side of the X stabilizer 80A. In this case, the direction of a hook error that may occur in the X syndrome measurement circuit for the X stabilizer 80A is the horizontal direction.

Four physical qubits and one ancilla qubit belong to an X stabilizer 80B. The four physical qubits are arranged at the four vertices of a square. The ancilla qubit is arranged at the center of the square. An X syndrome measurement circuit for the X stabilizer 80B applies CNOT gates to the respective physical qubits arranged at the vertices, in the order of the lower-left vertex, the upper-left vertex, the lower-right vertex, and the upper-right vertex as viewed in the drawing. Then, the order in which an X error occurring in the ancilla qubit propagates to the physical qubits is an order along the vertical side of the X stabilizer 80B. In this case, the direction of a hook error that may occur in the X syndrome measurement circuit for the X stabilizer 80B is the vertical direction.

Note that the horizontal direction and the vertical direction represent the horizontal direction and the vertical direction as viewed in the drawing, respectively. One of the two directions of a hook error is orthogonal to the other direction. For a Z syndrome measurement circuit, the direction of a hook error may be determined in the same manner as for the X syndrome measurement circuit.

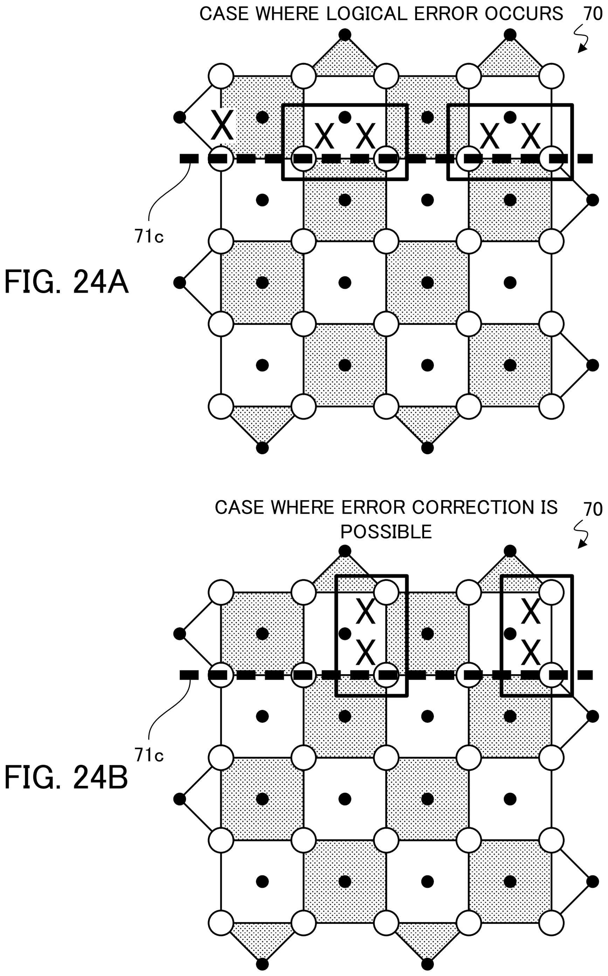

FIGS. 24A and 24B illustrate examples of relationships between the direction of a hook error and the direction of a logical operator. FIG. 24A illustrates a case where a logical error occurs due to the occurrence of many hook errors. A logical X operator 71c is an example of a logical X operator defined in the surface code 70 with a code distance of 5. The direction of the logical X operator 71c corresponds to the direction of a path representing the logical X operator 71c. For example, if many hook errors occur along the direction of the logical X operator 71c, X errors occur in four physical qubits located on the path of the logical X operator 71c. Then, the error is erroneously recognized as an X error of one remaining physical qubit on the path, and a logical error occurs.

Here, in a code with a code distance of 5, it is originally possible to correct up to errors of p², where p denoting a physical error rate, that is, errors occurring in two physical qubits. However, a logical error may occur due to hook errors along the direction of the logical X operator 71c, which may result in a failure to achieve the code distance performance.

FIG. 24B illustrates a case where a logical error does not occur even if many hook errors occur. If many hook errors occur in a direction orthogonal to the direction of the logical X operator 71c, X errors occur in two physical qubits located on the path of the logical X operator 71c. In this case, for a code distance of 5, the errors are suppressed to two physical qubits, and are thus appropriately correctable.

As described above, even if many hook errors occur, the hook errors are appropriately correctable if the direction of the hook errors is orthogonal to the direction of the logical operator. Therefore, it is preferable to determine a CNOT application order for a syndrome measurement circuit so as to be orthogonal to the direction of the logical operator.

Note that in some cases, a hook error may be reduced to an error occurring in one or fewer physical qubits by applying a stabilizer operator, and therefore no problem occurs.

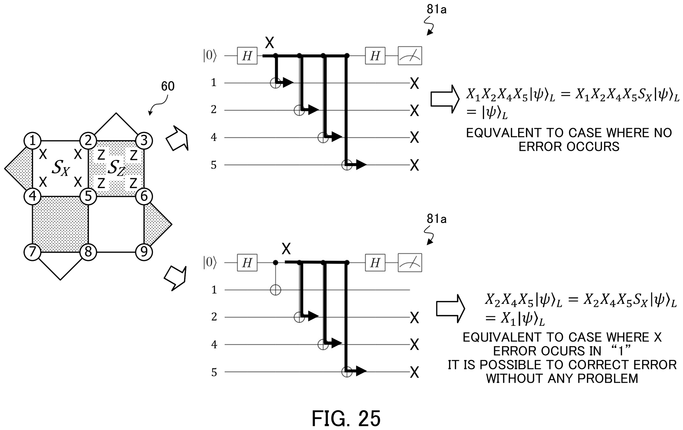

FIG. 25 illustrates examples of hook errors that do not cause any problem. An X syndrome measurement circuit 81a corresponds to a location where "S_{X}" is indicated in the surface code 60. White circles in the surface code 60 indicate physical qubits. Numbers in the white circles are the identification numbers of the physical qubits. The X syndrome measurement circuit 81a applies CNOT gates to the physical qubits with identification numbers "1", "2", "4", and "5" in this order.

For example, it is assumed that an X error occurs in an ancilla qubit before the application of the first CNOT gate of the X syndrome measurement circuit 81a. Then, the X error in the ancilla qubit propagates to the four physical qubits with identification numbers "1", "2", "4", and "5" via the CNOT gates. In this case, X₁X₂X₄X₅|Ψ〉_{L} = X₁X₂X₄X₅S_{X} | Ψ〉_{L} = |Ψ〉_{L}. That is, by the X stabilizer S_{X} acting on |Ψ〉_{L}, the error becomes equivalent to a case where no error occurs. Therefore, a logical error problem caused by a hook error does not occur.

In addition, it is assumed that an X error occurs in the ancilla qubit after the application of the first CNOT gate of the X syndrome measurement circuit 81a and before the application of the second CNOT gate. Then, the X error in the ancilla qubit propagates to three physical qubits with identification numbers "2", "4", and "5" via the CNOT gates. In this case, X₂X₄X₅|Ψ〉_{L} = X₂X₄X₅S_{X}|Ψ〉_{L} = X₁|Ψ〉_{L}. That is, this is equivalent to a case where an X error occurs in the physical qubit with identification number "1". In this case, since the error does not split or increase, it is possible to correct the error without any problem. Therefore, a logical error problem caused by a hook error does not occur.

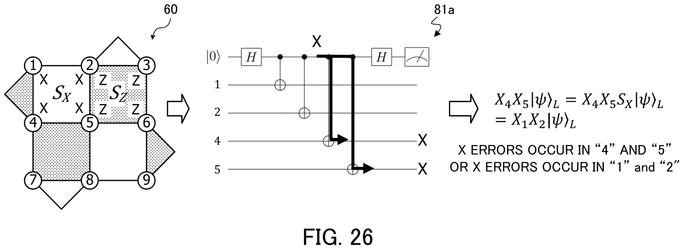

FIG. 26 illustrates an example of a hook error that causes a problem. For example, it is assumed that an X error occurs in the ancilla qubit after the application of the second CNOT gate of the X syndrome measurement circuit 81a and before the application of the third CNOT gate. Then, the X error in the ancilla qubit propagates to two physical qubits with identification numbers "4" and "5" via the CNOT gates. In this case, X₄X₅|Ψ〉_{L} = X₄X₅S_{X}|Ψ〉_{L} = X₁X₂|Ψ〉_{L}. Therefore, it is uncertain whether errors have occurred in the two physical qubits with identification numbers "4" and "5" or errors have occurred in the two physical qubits with identification numbers "1" and "2". Note that the hook errors occur in the same direction.

In the case of FIG. 26, even if a stabilizer operator acts on |Ψ〉_{L}, the error remains as two errors. Therefore, the error is not cancelled by the effect of the stabilizer operator. Therefore, in determining the CNOT application order, the occurrence timing of an X error to be mainly considered is the period after the application of the second CNOT gate of the syndrome measurement circuit and before the application of the third CNOT gate.

In FIGS. 24A, 24B, 25, and 26, the X syndrome measurement circuit has been mainly described by way of example, but the same applies to a Z syndrome measurement circuit.

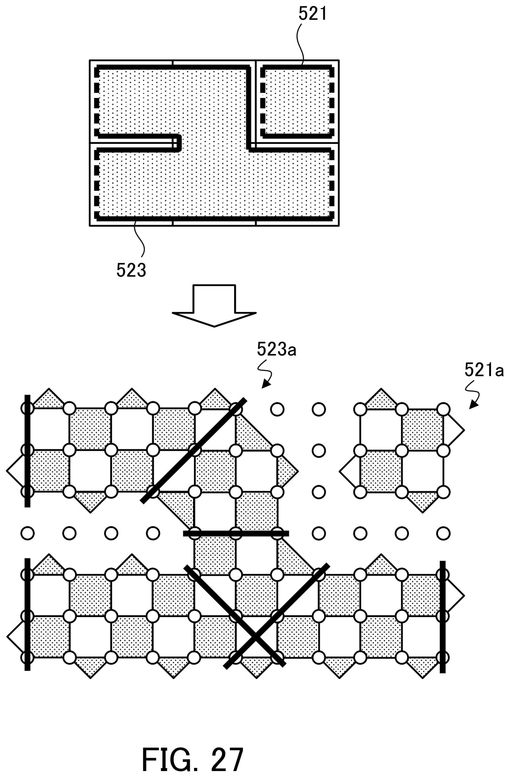

FIG. 27 illustrates examples of logical operators defined for a patch. As described above, during execution of LS, not only patches having simple shapes illustrated in FIGS. 17 and 18 but also patches having complex shapes such as the patch 523 may appear.

A patch 521 is an example of a patch having a simple shape. A patch 521a corresponds to the patch 521. The patch 521a is illustrated without omission of physical qubits belonging to the patch 521. White circles in FIG. 27 correspond to physical qubits. For a patch having a simple shape, the structure of a logical operator is simple. Specifically, for a patch having a simple shape, the direction of any logical operator is constant. Therefore, in a patch having a simple shape, a CNOT application order for a syndrome measurement circuit is readily determined.

A patch 523 is an example of a patch having a complex shape. A patch 523a corresponds to the patch 523. The patch 523a is illustrated without omission of physical qubits belonging to the patch 523. For a patch having a complex shape, the structure of a logical operator is complex. Specifically, for a patch having a complex shape, logical operators may take various directions. Therefore, for a patch having a complex shape, a CNOT application order for a syndrome measurement circuit is not readily determined. Note that thick-line sides illustrated on the patch 523 represent examples of logical Z operators.

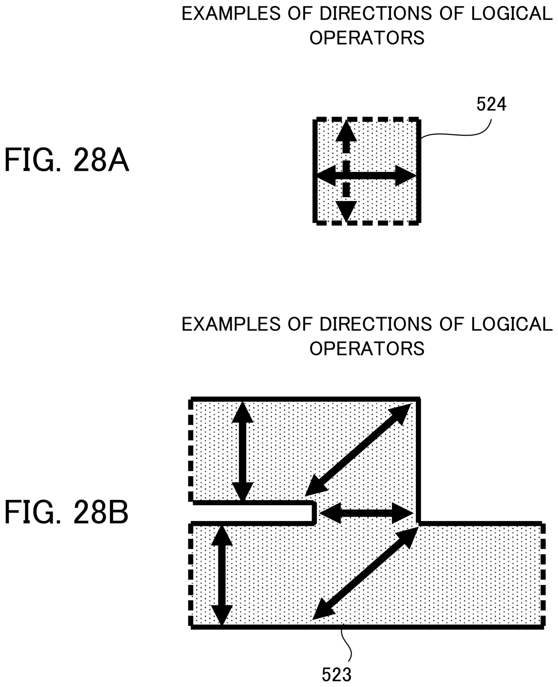

FIGS. 28A and 28B illustrate examples of directions of logical operators. FIG. 28A illustrates the directions of logical X and Z operators in a patch 524 having a simple shape. The patch 524 is obtained by rotating the patch 521 by 90 degrees. Here, dotted boundaries of the patch are X boundaries. Solid boundaries of the patch are Z boundaries.

In the patch 524, the upper and lower opposing boundaries are X boundaries. The direction of any logical X operator is constant in the direction of a path connecting the upper and lower opposing X boundaries, that is, in the vertical direction. In the figure, the direction of a logical X operator is indicated by a dotted arrow.

In the patch 524, the left and right opposing boundaries are Z boundaries. The direction of any logical Z operator is constant in the direction of a path connecting the left and right opposing Z boundaries, that is, in the horizontal direction. In the figure, the direction of a logical Z operator is indicated by a solid arrow.

FIG. 28B illustrates directions of logical Z operators in the patch 523 having a complex shape. In the patch 523, the boundaries at the left and right ends are X boundaries, and the other boundaries are Z boundaries. In the patch 523, logical Z operators having various directions are defined as paths connecting two disconnected Z boundaries. Thus, in a patch having a complex shape, logical operators are able to take various directions.

Therefore, with respect to patches having various shapes that appear in the course of LS, the classical computer 100 optimizes CNOT application orders for syndrome measurement circuits. In the second embodiment, as a premise, it is assumed that measurements of a plurality of patches by LS are performed in the Z basis. Measurements of a plurality of patches correspond to measurements of a plurality of logical qubits. A measurement in an arbitrary basis is reduced to a measurement in the Z basis by Clifford operations. In the case of a space-saving patch arrangement assuming a STAR architecture or the like, the overhead associated with basis transformation and the overhead associated with patch orientation change are substantially the same. Therefore, even if measurements are assumed to be performed in the Z basis, the overhead is not expected to change significantly.

Under the above premise, patches that appear in the course of LS satisfy the following conditions. First, end points of a patch involved in a measurement are X boundaries, and the other boundaries are Z boundaries. Accordingly, a hook error to be considered in determining a CNOT application order is limited to a hook error associated with a Z stabilizer. Therefore, the classical computer 100 only needs to optimize CNOT application orders for Z syndrome measurement circuits. The classical computer 100 is able to set fixed CNOT application orders for X syndrome measurement circuits.

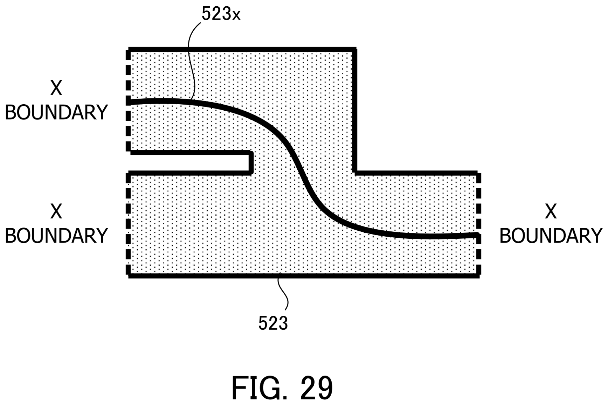

FIG. 29 illustrates an example of a code distance of a logical X operator during execution of LS. Here, measurements of a plurality of logical qubits are limited to measurements in the Z basis. When each patch is merged with an ancilla region, that patch always has an X boundary on a side thereof that is not connected to the ancilla region. On the other hand, the X boundary on a side of each patch that is connected to the ancilla region disappears. For example, in the patch 523 obtained by merging the patches 518, 519, and 520, three end points on the left and right in the drawing are X boundaries. The X boundaries are indicated by dotted lines. The boundaries other than the X boundaries are Z boundaries. The Z boundaries are indicated by solid lines.

A logical X operator connects two X boundaries. A logical X operator 523x is an example of a logical X operator in the patch 523. The length of the logical X operator 523x is longer than that of a normal square patch, such as the patches 518, 519, and 520. That is, in the patch 523, the code distance of the logical X operator is temporarily long. Therefore, even if a hook error occurs along the logical X operator, it is not fatal. Therefore, there is no problem even if the CNOT application order for the X syndrome measurement circuit is fixed.

It is also conceivable to limit measurements of a plurality of logical qubits to measurements in the X basis. In this case, the above X boundaries and Z boundaries are swapped. Here, measurements of a plurality of logical qubits are limited to measurements in the X basis. In this case, the classical computer 100 only needs to set a fixed CNOT application order for Z syndrome measurement circuits and optimize CNOT application orders for X syndrome measurement circuits.

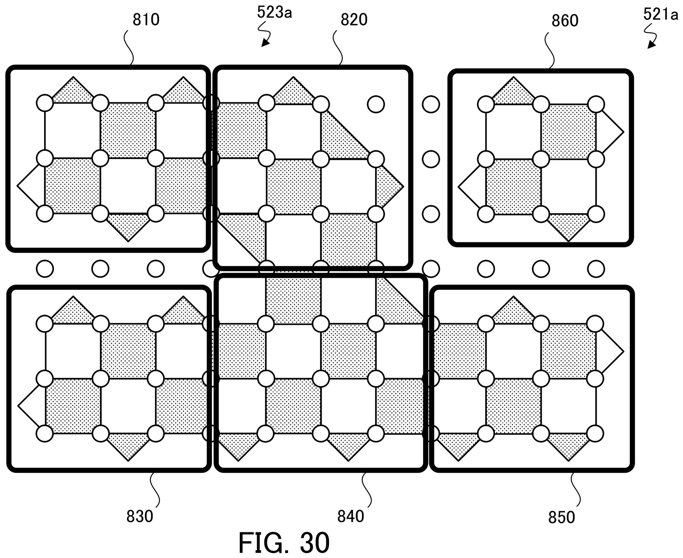

FIG. 30 illustrates an example of an element decomposition of a patch. A patch having any shape that appears in the course of LS may be decomposed into one or more elements. Elements of a patch are referred to as patch elements. In the case where one patch is decomposed into a plurality of patch elements, the patch elements are classified into two types. The first type of patch element is a linear element. A linear element is a portion that is simply connected to another patch element along one direction. The second type of patch element is a joint element. A joint element is a portion that changes the orientation between adjacent patch elements or connects a plurality of patch elements.

For example, the patch 523a is decomposed into patch elements 810, 820, 830, 840, and 850. The patch elements 810, 830, and 850 are linear elements. The patch elements 820 and 840 are joint elements.

The patch 521a is a square patch corresponding to a single logical qubit. The patch 521a is not a patch created by merging a plurality of patches. Thus, the patch 521a is also regarded as a patch element 860 of the patch 521a. The patch element 860 is not connected to other patch elements, but may be classified as a linear element for convenience.

The classical computer 100 decomposes a patch into a plurality of patch elements, and optimizes, for each patch element, a CNOT application order for a syndrome measurement circuit.

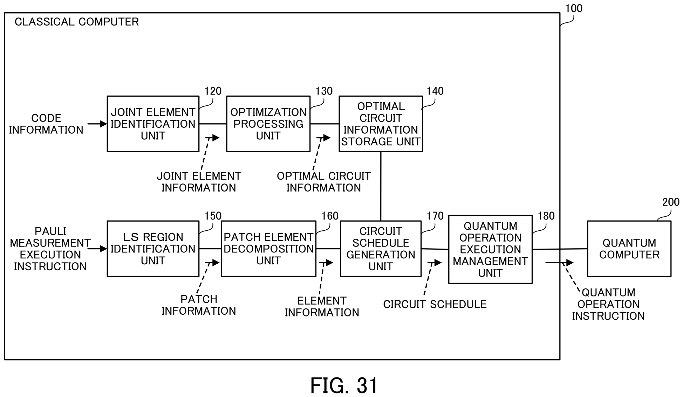

FIG. 31 illustrates an example of functions of the classical computer. The classical computer 100 includes a joint element identification unit 120, an optimization processing unit 130, an optimal circuit information storage unit 140, an LS region identification unit 150, a patch element decomposition unit 160, a circuit schedule generation unit 170, and a quantum operation execution management unit 180. As the optimal circuit information storage unit 140, storage areas of the memory 102 and the storage device 103 are used. The joint element identification unit 120, the optimization processing unit 130, the LS region identification unit 150, the patch element decomposition unit 160, the circuit schedule generation unit 170, and the quantum operation execution management unit 180 are implemented by the processor 101 executing a program stored in the memory 102.

The joint element identification unit 120 acquires code information. The code information may be input from the terminal device 400 to the classical computer 100. The code information is information specifying a patch that appears in the course of LS. The joint element identification unit 120 decomposes the patch specified by the code information into a plurality of patch elements. The joint element identification unit 120 identifies a joint element from the plurality of patch elements.

As will be described later, with respect to a linear element, an optimal CNOT application order for a syndrome measurement circuit is readily determined. On the other hand, with respect to a joint element, an optimal CNOT application order for a syndrome measurement circuit is not readily determined. Therefore, the joint element identification unit 120 identifies a joint element as an optimization target patch element. The joint element identification unit 120 outputs joint element information to the optimization processing unit 130. The joint element information is a diagram indicating joint elements obtained based on the code information.

Note that the code information may be information specifying a plurality of patch elements that may be included in a patch that appears in the course of LS. In the case where the code information specifies a plurality of patch elements, the joint element identification unit 120 identifies a joint element from the plurality of patch elements specified by the code information. In this case, the joint element identification unit 120 does not need to perform element decomposition of the patch.

The optimization processing unit 130 performs, for a joint element, an optimization process of a CNOT application order for a syndrome measurement circuit on the basis of the joint element information. In this example, the optimization processing unit 130 fixes a CNOT application order for X syndrome measurement circuits. Then, the optimization processing unit 130 optimizes CNOT application orders for Z syndrome measurement circuits. The optimization processing unit 130 generates optimal circuit information based on the result of the optimization process. The optimal circuit information is information that holds, for each Z syndrome measurement circuit in a joint element, a CNOT application order obtained as a result of the optimization process in association with the joint element. For example, identification information is given to each joint element according to the structure of the joint element. The optimal circuit information holds the CNOT application order in association with the identification information. The optimal circuit information may also include information on CNOT application orders for X syndrome measurement circuits in the joint element. The optimization processing unit 130 stores the optimal circuit information in the optimal circuit information storage unit 140. The CNOT application order obtained as a result of the optimization process is also referred to as an optimal circuit schedule or an optimal schedule.

The optimization processing unit 130 performs the optimization process of CNOT application orders for various joint elements. The optimization processing unit 130 registers the CNOT application orders obtained by the optimization process in the optimal circuit information in association with the corresponding joint elements.

The optimal circuit information storage unit 140 stores the optimal circuit information.

When quantum computation is to be performed by the quantum computer 200, the LS region identification unit 150 receives a Pauli measurement execution instruction related to the quantum computation. The Pauli measurement execution instruction is an instruction to execute a Pauli measurement on a logical qubit. A Pauli measurement on a logical qubit is performed by LS. The Pauli measurement execution instruction includes information specifying the shapes of patches that appear in the course of LS. For example, each time a Pauli measurement is performed on a logical qubit by the quantum computer 200, the LS region identification unit 150 receives a Pauli measurement execution instruction related to the Pauli measurement.

The LS region identification unit 150 identifies the shape of a patch that appears in the course of LS, based on the Pauli measurement execution instruction. The LS region identification unit 150 outputs patch information indicating the identified patch shape to the patch element decomposition unit 160.

The patch element decomposition unit 160 performs, based on the patch information, element decomposition of the patch indicated by the patch information. The patch element decomposition unit 160 decomposes the patch into a patch element group through the element decomposition. For example, a patch obtained by merging a plurality of patches, such as the patch 523a in FIG. 30, is decomposed into a plurality of patch elements. The element decomposition of a patch may include identifying one patch element for a certain patch, such as identifying the patch element 860 from the patch 521a in FIG. 30. The patch element decomposition unit 160 outputs element information indicating the patch element group obtained by the element decomposition to the circuit schedule generation unit 170.

The circuit schedule generation unit 170 acquires a CNOT application order corresponding to each patch element indicated by the element information, based on the optimal circuit information stored in the optimal circuit information storage unit 140. For example, the circuit schedule generation unit 170 acquires identification information corresponding to the structure of a patch element indicated by the element information. The circuit schedule generation unit 170 searches the optimal circuit information using the identification information, and acquires a CNOT application order associated with the identification information from the optimal circuit information. Note that an appropriate CNOT application order for a linear element is readily determined. Therefore, the circuit schedule generation unit 170 is able to assign a CNOT application order to a patch element classified as a linear element, without referring to the optimal circuit information.

The circuit schedule generation unit 170 determines a CNOT application order for the syndrome measurement circuit in each patch element indicated by the element information. Then, the circuit schedule generation unit 170 generates a circuit schedule by integrating the CNOT application orders determined for all the patch elements indicated by the element information. The circuit schedule indicates the CNOT application order for each syndrome measurement circuit included in the entire patch identified based on the Pauli measurement execution instruction. The circuit schedule generation unit 170 outputs the circuit schedule to the quantum operation execution management unit 180.

The quantum operation execution management unit 180 outputs a quantum operation instruction to the quantum computer 200 based on the circuit schedule. The quantum operation instruction includes the CNOT application orders for the syndrome measurement circuits. Via the quantum operation instruction, the quantum operation execution management unit 180 informs the quantum computer 200 of the CNOT application order for each syndrome measurement circuit in the patch of interest. The quantum computer 200 performs X syndrome measurements and Z syndrome measurements based on the quantum operation instruction, and performs quantum error correction based on the measurement results.

Here, in the qubit device 202, a plurality of patches are arranged in advance for LS.

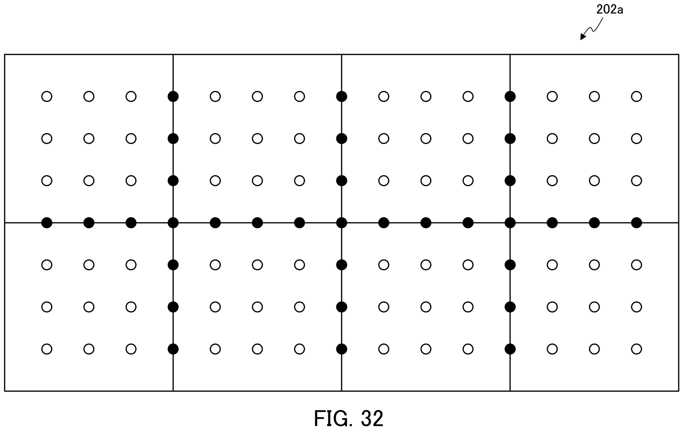

FIG. 32 illustrates an example of an arrangement of a plurality of physical qubits. An array 202a is an example of an arrangement of a plurality of physical qubits in the qubit device 202. The plurality of physical qubits are arranged in a lattice. White circles indicate physical qubits for the code. A single logical qubit is encoded using nine physical qubits. Black circles indicate physical qubits for patch operations by LS. A single square region corresponds to a single patch. Note that some of the physical qubits for the code may also be used as physical qubits for patch operations by LS. A patch is decomposed into patch elements based on lines of physical qubits for patch operations by LS.

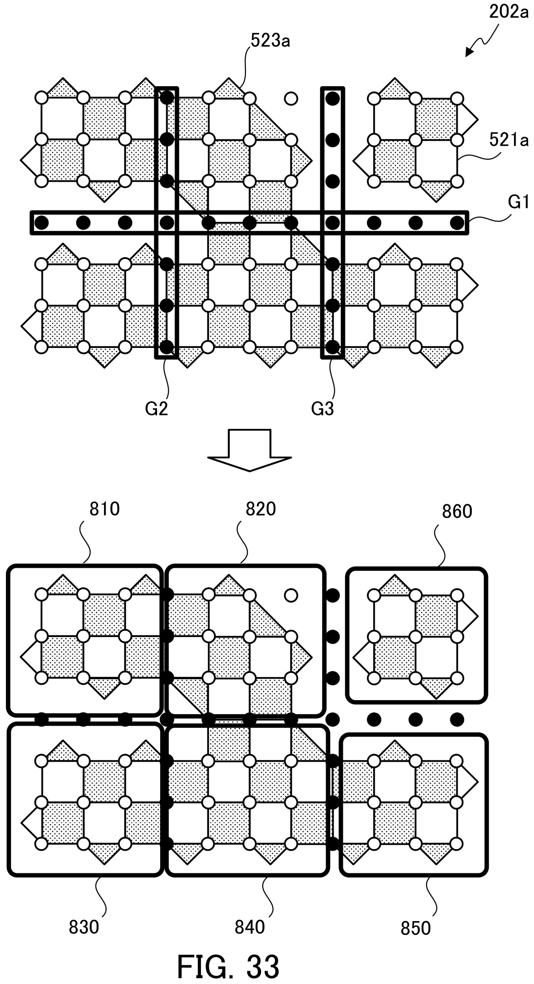

FIG. 33 illustrates an example of an element decomposition method. In the array 202a, the patches are partitioned, for example, by lines G1, G2, and G3 of physical qubits for patch operations by LS. FIG. 33 illustrates a part of the array 202a of FIG. 32.

For example, the patch element decomposition unit 160 partitions the patch 523a on the array 202a by the lines G1, G2, and G3, thereby decomposing the patch 523a into the five patch elements 810, 820, 830, 840, and 850.

In contrast, the patch 521a is not partitioned by the lines G1, G2, and G3. Therefore, the patch element decomposition unit 160 sets the patch 521a itself as its patch element 860.

Note that the joint element identification unit 120 may perform element decomposition using a method similar to the method illustrated in FIG. 33.

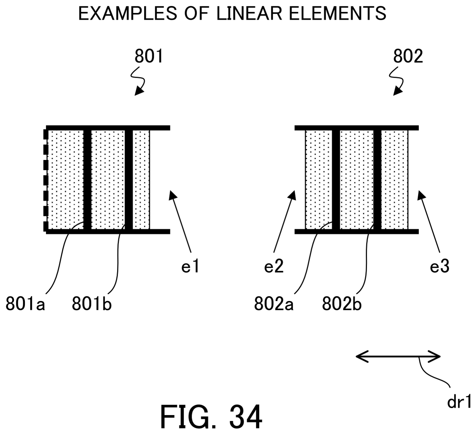

FIG. 34 illustrates examples of linear elements. Patch elements 801 and 802 are linear elements. Specifically, the patch element 801 is a linear element that is connected to another patch element along one direction dr1. The patch element 802 is a linear element that is connected to two other patch elements along one direction dr1. The patch elements 801 and 802 are not connected to any other patch elements along a direction different from that direction dr1.

In this example, two boundaries of each patch element 801 and 802, which are indicated by thick opposing solid lines, are Z boundaries. The patch element 801 has one X boundary. The X boundary is indicated by a dotted line. An end e1 of the patch element 801, which is neither an X boundary nor a Z boundary, is a connection boundary that is connected to another patch element. Ends e2 and e3 of the patch element 802, which are not Z boundaries, are connection boundaries.

Logical Z operators 801a and 801b are minimum-weight logical Z operators defined in the patch element 801. Logical Z operators 802a and 802b are minimum-weight logical Z operators defined in the patch element 802. In a linear element, the direction of any logical Z operator is constant. Thus, an optimal application order of CNOT gates for a Z syndrome measurement circuit in a linear element is readily determined.

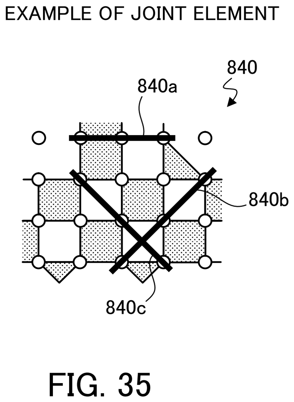

FIG. 35 illustrates an example of a joint element. A patch element 840 is a joint element. Logical Z operators 840a, 840b, and 840c are examples of minimum-weight logical Z operators defined in the patch element 840. In a joint element, the direction of a logical operator changes as the logical operator is deformed or split. For example, in the patch element 840, as exemplified by the logical Z operators 840a, 840b, and 840c, the minimum-weight logical operators do not have a constant direction, but may have various directions.

For this reason, in a joint element, an appropriate direction of a hook error is not readily determined. Therefore, the optimization processing unit 130 optimizes the CNOT application order for the joint element.

Joint elements are classified into two-way joints, three-way joints, and four-way joints. The patch element 840 is a three-way joint.

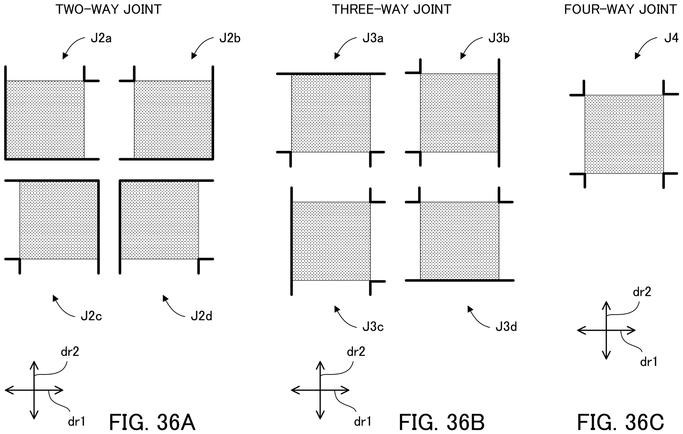

FIGS. 36A, 36B, and 36C illustrate an example of classifying joint elements. FIG. 36A illustrates two-way joints J2a, J2b, J2c, and J2d. The two-way joints J2a, J2b, J2c, and J2d are joint elements that are each connected to two other patch elements along two orthogonal directions dr1 and dr2. Note that each boundary of each joint element indicated by thick lines is a Z boundary. An open end that is not a Z boundary is a connection boundary.

FIG. 36B illustrates three-way joints J3a, J3b, J3c, and J3d. The three-way joints J3a, J3b, J3c, and J3d are joint elements that are each connected to three other patch elements along two orthogonal directions dr1 and dr2.

FIG. 36C illustrates a four-way joint J4. The four-way joint J4 is a joint element that is connected to four other patch elements along two orthogonal directions dr1 and dr2.

A patch of any shape is created by a combination of the joint elements illustrated in FIGS. 36A, 36B and 36C and linear elements.

Note that the structures of stabilizer operators of two joint elements may be equivalent. In this case, the optimization processing unit 130 may be able to obtain, based on a CNOT application order determined for one joint element through the optimization process, an optimized CNOT application order for the other joint element. By doing so, the optimization processing unit 130 may be able to omit the optimization process of the CNOT application order for the other joint element.

The optimization processing unit 130 identifies a minimum-weight logical Z operator defined for a patch element in order to prevent a decrease in code distance due to a hook error. Here, the following description mainly focuses, by way of example, on the patch element 820 that is a joint element. Note that the optimization processing unit 130 is able to perform the same processing for other joint elements. The patch element 820 is a joint element classified as the two-way joint J2c.

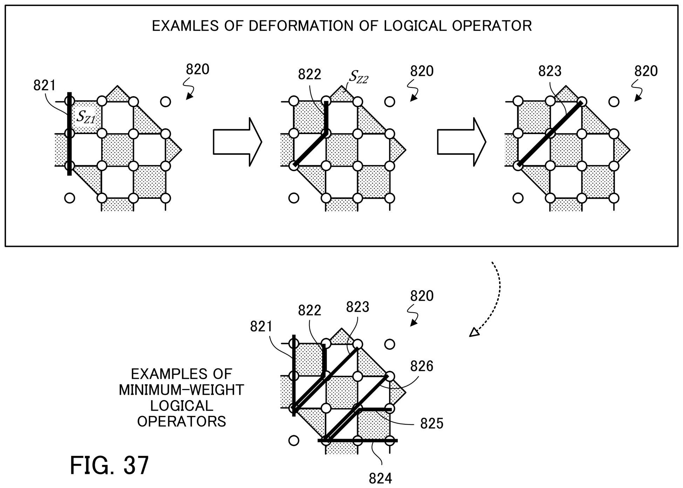

FIG. 37 illustrates an example of identifying minimum-weight logical operators. For example, the optimization processing unit 130 is able to identify minimum-weight logical Z operators for the patch element 820 as follows.

A minimum-weight logical operator is defined along a connection boundary of a patch element. Therefore, first, the optimization processing unit 130 identifies a logical Z operator 821 defined along one connection boundary of the patch element 820. The logical Z operator 821 has a weight of 3, which is the minimum among the weights of a plurality of logical Z operators defined for the patch element 820.

Next, the optimization processing unit 130 applies a Z stabilizer S_{Z1} adjacent to the logical Z operator 821 to the logical Z operator 821. By doing so, the logical Z operator 821 is deformed into a logical Z operator 822. The logical Z operator 822 has a minimum weight of 3.

Next, the optimization processing unit 130 applies a Z stabilizer S_{Z2} adjacent to the logical Z operator 822 to the logical Z operator 822. By doing so, the logical Z operator 822 is deformed into a logical Z operator 823. The logical Z operator 823 has a minimum weight of 3.

A logical Z operator obtained by applying a Z stabilizer other than S_{Z1} and S_{Z2} to the logical Z operator 823 has a weight larger than 3. Therefore, the optimization processing unit 130 ends the deformation starting from the logical Z operator 821, and obtains the minimum-weight logical Z operators 821, 822, and 823.

The optimization processing unit 130 obtains minimum-weight logical Z operators for the remaining connection boundaries of the patch element 820 in a similar manner. As a result, the optimization processing unit 130 obtains the minimum-weight logical Z operators 821, 822, 823, 824, 825, and 826 for the patch element 820.

Here, a logical error occurring in a joint element may be transformed into a product of logical operators along connection boundaries by using stabilizer operators. For example, in the case of a two-way joint, a logical error is transformed into a logical operator of any one connection boundary. In the case of a three-way joint, a logical operator is transformed into a logical operator along any one connection boundary (= a product of logical operators along the remaining two connection boundaries excluding that logical operator). In the case of a four-way joint, a logical operator is transformed into a product of logical operators along any two connection boundaries or a logical operator along any one connection boundary (= a product of logical operators along the remaining three connection boundaries excluding that logical operator).

Therefore, the optimization processing unit 130 is able to obtain most of the minimum-weight logical operators in a joint element by performing an operation of searching for minimum-weight logical operators from one connection boundary.

Note that, in the operation starting from one connection boundary, it is not possible to identify, for a four-way joint, a logical operator corresponding to a logical error that is transformed into a product of logical operators along two connection boundaries of the four-way joint. However, the logical operator that is transformed into a product of logical operators along two connection boundaries is represented by a path passing diagonally within a patch element. Note that a hook error does not occur directly along a diagonal direction. Therefore, even if a logical operator that is transformed into a product of logical operators along two connection boundaries is a minimum-weight logical operator, no problem arises even if the logical operator is not considered.

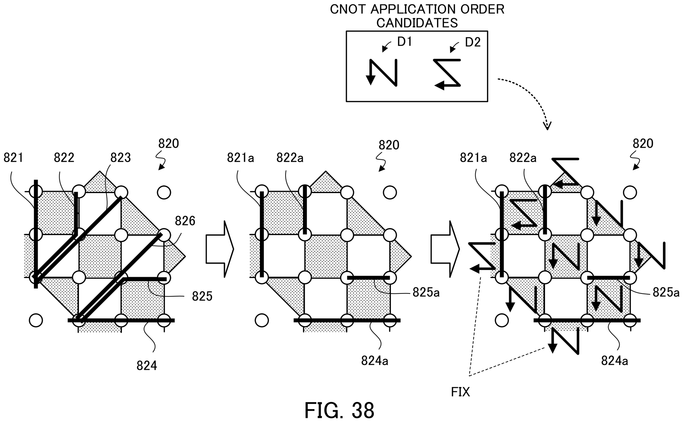

FIG. 38 illustrates an example of optimizing CNOT application orders. The optimization processing unit 130 optimizes CNOT application orders as follows, based on information on the minimum-weight logical Z operators 821, 822, 823, 824, 825, 826 identified for the patch element 820.

First, the optimization processing unit 130 identifies locations where hook errors are prohibited with respect to the minimum-weight logical Z operators 821, 822, 823, 824, 825, and 826. Here, the locations where hook errors are prohibited are portions of the minimum-weight logical operators that lie along sides of a lattice forming the patch. Locations of sides 821a, 822a, 824a, and 825a indicated by thick lines are locations where hook errors are prohibited in the patch element 820.

The optimization processing unit 130 determines the CNOT application order for each Z syndrome measurement circuit such that the direction of a hook error is orthogonal to the corresponding side 821a, 822a, 824a, or 825a. At this time, the optimization processing unit 130 assumes a quantum circuit having a depth of 4 for the Z syndrome measurement circuits. The optimization processing unit 130 assigns two types of application orders as candidates to each Z syndrome measurement circuit. Further, in order to ensure consistency with a connection to a linear element, the optimization processing unit 130 fixes a CNOT application order for a Z syndrome measurement circuit located outside a connection boundary so as to match the CNOT application order of the linear element. As a result, consistency of the application orders with other patch elements and X syndrome measurement circuits is maintained. In addition, the optimization processing unit 130 determines the application order such that no collision occurs in a plurality of adjacent syndrome measurement circuits. However, in determining the application orders, avoidance of hook errors is prioritized over avoidance of collisions.

Application orders D1 and D2 are examples of CNOT application order candidates for Z syndrome measurement circuits. The application order D1 indicates that CNOT gates are applied to four physical qubits arranged at the four vertices of a square in the order of the upper-right vertex, the lower-right vertex, the upper-left vertex, and the lower-left vertex as viewed in the drawing. The application order D2 indicates that CNOT gates are applied to four physical qubits arranged at the four vertices of a square in the order of the upper-right vertex, the upper-left vertex, the lower-right vertex, and the lower-left vertex as viewed in the drawing.

The optimization processing unit 130 fixes the CNOT application orders for X syndrome measurement circuits to be the application order D2.

The optimization processing unit 130 formulates an optimization problem in order to determine a CNOT application order for each Z syndrome measurement circuit.

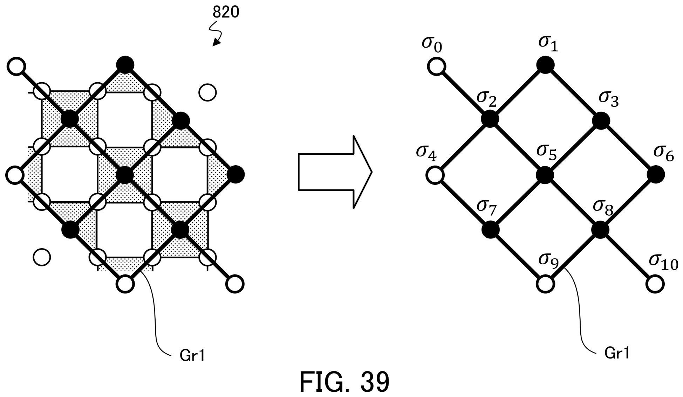

FIG. 39 illustrates an example of a graph used for formulation of an optimization problem. The optimization processing unit 130 performs optimization calculation using, for example, an Ising model. Specifically, the optimization processing unit 130 formulates a problem of determining a CNOT application order as an optimization problem for finding {σᵢ} that minimizes an objective function H = H({σᵢ}). The objective function H is represented by Expression (1).

σᵢ is a variable that takes a value of either +1 or -1. i is the identification number of a Z stabilizer or a Z syndrome measurement circuit. Let N denote the total number of Z syndrome measurement circuits to be considered in a patch element of interest. N includes the number of Z syndrome measurement circuits corresponding to Z stabilizers on a boundary connected to another patch element. Possible values of σᵢ and the index i are given by Expression (2). Coefficients Jᵢⱼ and hᵢ in Expression (1) are constants given in advance. Details of Jᵢⱼ and hᵢ will be described later.

The optimization processing unit 130 extracts a graph Gr1 for the patch element 820. The graph Gr1 has a plurality of nodes and a plurality of edges. A node is a vertex corresponding to an optimization target Z stabilizer. It may also be said that the identification number i is the identification number of a node. An edge is a side connecting two adjacent nodes. The optimization processing unit 130 assigns a variable σᵢ to each of the plurality of nodes. For example, the graph Gr1 has 11 nodes. The optimization processing unit 130 assigns one of the variables σ₀ to σ₁₀ to each node. Note that white-circle nodes correspond to Z stabilizers on boundaries connected to other patch elements. As will be described later, the values of σᵢ corresponding to the white-circle nodes of the graph Gr1 are fixed.

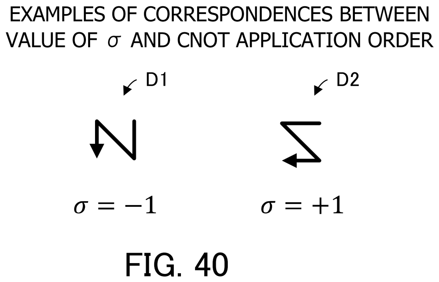

FIG. 40 illustrates examples of correspondences between a value of σ and a CNOT application order. The optimization processing unit 130 associates application orders D1 and D2 with the values of σ. For example, the optimization processing unit 130 associates the application order D1 with σ = -1. The optimization processing unit 130 associates the application order D2 with σ = +1.

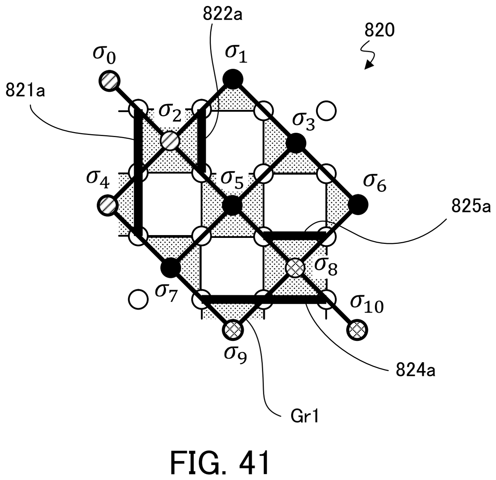

FIG. 41 illustrates a method for determining the coefficient hᵢ. The optimization processing unit 130 sets hᵢ = -1 for a node i in which a horizontal hook error is preferred. A horizontal hook error corresponds to a hook error occurring in the horizontal direction in the drawing.

The optimization processing unit 130 sets hᵢ = +1 for a node i in which a vertical hook error is preferred. A vertical hook error corresponds to a hook error occurring in the vertical direction in the drawing.

The optimization processing unit 130 sets hᵢ = 0 for a node i in which it does not matter whether the direction of a hook error is horizontal or vertical.

In the example of the graph Gr1 for the patch element 820, the nodes "0", "2", and "4" adjacent to the sides 821a and 822a along the vertical direction, where hook errors are prohibited, are nodes where horizontal hook errors are preferred. Therefore, the optimization processing unit 130 sets h₀ = h₂ = h₄ = -1.

The nodes "8", "9", and "10" adjacent to the sides 824a and 825a along the horizontal direction, where hook errors are prohibited, are nodes where vertical hook errors are preferred. Therefore, the optimization processing unit 130 sets h₈ = h₉ = h₁₀ = +1.

Furthermore, the nodes "1", "3", "5", "6", and "7" are nodes where it does not matter whether the direction of a hook error is horizontal or vertical. Therefore, the optimization processing unit 130 sets h₁ = h₃ = h₅ = h₆ = h₇ = 0.

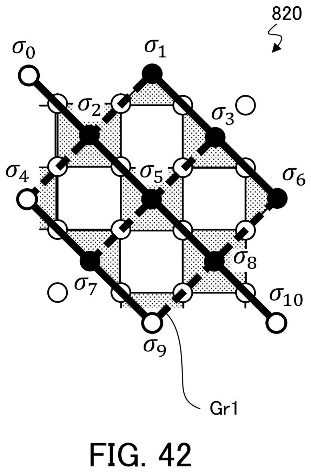

FIG. 42 illustrates a method for determining the coefficient Jᵢⱼ. For a pair of two syndrome measurement circuits in which no collision is desired to occur, the CNOT application orders are preferably the same. In this example, the pair of two syndrome measurement circuits in which no collision is desired to occur corresponds to a pair of two nodes having a positional relationship of upper left and lower right in the drawing. The optimization processing unit 130 sets Jᵢⱼ = -0.5 for the pair. Jᵢⱼ = -0.5 is set for the pair of interest such that H({σᵢ}) becomes smaller when σᵢσⱼ = +1.

The optimization processing unit 130 sets Jᵢⱼ = 0 for pairs other than the pair of two nodes having the positional relationship of upper left and lower right.

Specifically, the optimization processing unit 130 sets Jᵢⱼ = -0.5 for (i, j) = (2, 0), (3, 1), (5, 2), (7, 4), (6, 3), (8, 5), (9, 7), and (10, 8). The optimization processing unit 130 sets Jᵢⱼ = 0 for the other (i, j).

Here, for hᵢ and Jᵢⱼ, the signs are particularly important. The magnitudes of the absolute values of hᵢ and Jᵢⱼ are arbitrary. The magnitudes of the absolute values of hᵢ and Jᵢⱼ described above are examples. The absolute values of hᵢ and Jᵢⱼ are set to appropriate values according to the problem.

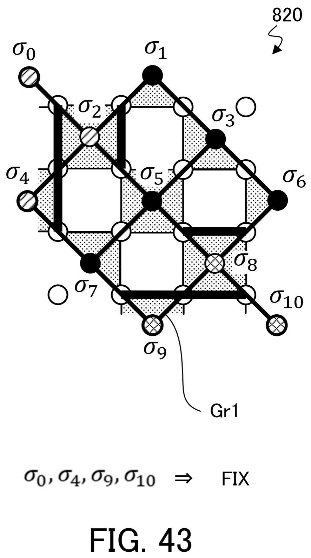

FIG. 43 is a diagram for describing the fixation of the value of σ. Finally, the optimization processing unit 130 fixes the CNOT application order for a Z stabilizer on a boundary connected to another patch element. That is, the optimization processing unit 130 does not use σᵢ corresponding to the Z syndrome measurement circuit of interest as a variable, but replaces σᵢ with a constant having the value of an appropriate application order. As a result, the optimization processing unit 130 is able to provide the objective function H with a boundary condition for performing a connection to another patch element without inconsistency. In the example of the graph Gr1 for the patch element 820, the optimization processing unit 130 fixes the values of σ₀, σ₄, σ₉, and σ₁₀. That is, the optimization processing unit 130 replaces σ₀, σ₄, σ₉, and σ₁₀ with constants.

In this way, the optimization processing unit 130 defines the objective function H of Expression (1). The optimization processing unit 130 is able to obtain a solution {σᵢ} that minimizes the objective function H using a predetermined optimization algorithm. As the optimization algorithm, for example, quantum annealing, simulated annealing, or the like is used. As the optimization algorithm, other methods such as a steepest descent method and a tabu search may be used.

Here, depending on the shape of a joint element, a collision may occur in a quantum circuit with a depth of 4. A collision is a phenomenon in which a CNOT gate of a certain syndrome measurement circuit and a CNOT gate of another syndrome measurement circuit are applied to the same physical qubit simultaneously. Therefore, in the case where there is a location where a collision occurs in the solution {σᵢ} obtained based on the objective function H, the optimization processing unit 130 resolves the collision by increasing the depths of syndrome measurement circuits around the location to 5.

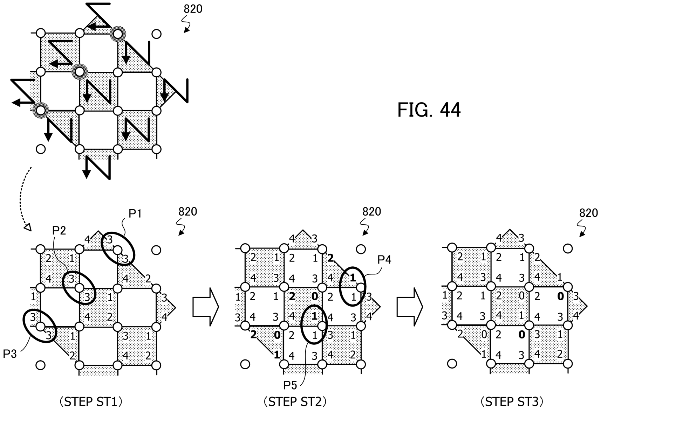

FIG. 44 illustrates an example of resolving collisions. The upper-left part of FIG. 44 illustrates a solution {σᵢ} obtained based on the objective function H for the patch element 820. Hatched regions in FIG. 44 correspond to Z stabilizers. Numerical values at the four corners of the Z stabilizers in the lower part of FIG. 44 indicate an order in which CNOT gates are applied to physical qubits. The optimization processing unit 130 detects collision locations P1, P2, and P3 in the solution {σᵢ} (step ST1).

For example, at the collision location P1, the third CNOT gate of the upper-left Z stabilizer and the third CNOT gate of the lower-right Z stabilizer are applied to the same physical qubit simultaneously. The collision locations P2 and P3 are locations where collisions similar to that of the collision location P1 occur.

Here, for example, the expression "the third CNOT gate of a Z stabilizer" is synonymous with "the third CNOT gate of a Z syndrome measurement circuit corresponding to a Z stabilizer". Further, "a CNOT application order for a Z syndrome measurement circuit corresponding to a Z stabilizer" may be simply abbreviated as "the CNOT application order of a Z stabilizer".

Next, the optimization processing unit 130 shifts forward, by a depth of 1, the first to third positions in the CNOT application order of the Z stabilizer located at the lower right of the physical qubit at the collision location P1, to the zeroth to second positions. Similarly, with respect to each collision location P2 and P3, the optimization processing unit 130 shifts forward, by a depth of 1, the first to third positions in the CNOT application order of the lower-right Z stabilizer (step ST2).

Then, collision locations P4 and P5 occur. At the collision location P4, the first CNOT gate of the upper-left Z stabilizer and the first CNOT gate of the lower-left X stabilizer are applied to the same physical qubit simultaneously. The collision location P5 is also a location where a collision similar to that of the collision location P4 occurs.

For this reason, the optimization processing unit 130 shifts forward, by a depth of 1, the first position in the CNOT application order of the X stabilizer located at the lower left of the physical qubit at the collision location P4 to the zeroth position. Similarly, with respect to the collision location P5, the optimization processing unit 130 shifts forward, by a depth of 1, the first position in the CNOT application order of the lower-left X stabilizer (step ST3).

Thus, collisions in each syndrome measurement circuit are resolved. Note that, by resolving the collisions, the CNOT application orders start from the zeroth position. In some syndrome measurement circuits, at least one of the zeroth to fourth positions in the application orders is absent. Such a missing position indicates that the syndrome measurement circuit remains idle without performing any operation at the timing of that position.

The collision resolution method illustrated in FIG. 44 is an example. The collision resolution method may follow the rules described below. First, in this example, there is a precondition that a CNOT application order for each Z syndrome measurement circuit is selected from two application orders D1 and D2, and the CNOT application orders for X syndrome measurement circuits are fixed. Under this precondition, a collision always occurs at the second or third CNOT gate in a Z syndrome measurement circuit.

In the case where a collision occurs at the third position, the optimization processing unit 130 shifts forward the (1, 2, 3)-th positions in the CNOT application order of the Z stabilizer located at the lower right of the collision location, to the (0, 1, 2)-th positions. Then, the optimization processing unit 130 shifts forward the (1)-th position for the X stabilizer located immediately below the Z stabilizer that has been subjected to the forward shifting, to the (0)-th position.

In the case where a collision occurs at the second position, the optimization processing unit 130 shifts backward the (2, 3, 4)-th positions in the CNOT application order of the Z stabilizer located at the lower-right of the collision location, to the (3, 4, 5)-th positions. Then, the optimization processing unit 130 shifts backward the (4)-th position for the X stabilizer located on the right (right neighbor) of the Z stabilizer that has been subjected to the backward shifting, to the (5)-th position.

Note that, in a stage prior to the collision resolution, it is preferable that the optimization processing unit 130 creates an optimization problem in advance and finds a solution that minimizes the number of collision locations in consideration of the above rules. In the case where the optimization processing unit 130 applies the above rules, only local syndrome measurement circuits around collision locations have a depth of 5. Therefore, the optimization processing unit 130 is able to minimize performance degradation caused by an increase in the depth of a syndrome measurement circuit.

The optimization processing unit 130 generates, as optimal circuit information, a result of performing collision resolution on the solution {σᵢ} obtained based on the objective function H, and stores the optimal circuit information in the optimal circuit information storage unit 140. Specifically, the optimization processing unit 130 registers, in the optimal circuit information, information on the CNOT application order for each Z syndrome measurement circuit in the patch element 820 in association with the identification information indicating the structure of the patch element 820. By doing so, in the case where a patch element having the same structure as the patch element 820 is identified during execution of LS in the future, the circuit schedule generation unit 170 is able to assign the application order corresponding to the patch element 820 to the identified patch element on the basis of the optimal circuit information.

In a linear element, the direction of any minimum-weight logical Z operator is constant. Therefore, in the case where a patch element identified during execution of LS is a linear element, the circuit schedule generation unit 170 is able to assign a predetermined application order orthogonal to the minimum-weight logical Z operator to the linear element on the basis of a standard circuit schedule. The standard circuit schedule is stored in advance in the memory 102 or the storage device 103 of the classical computer 100.

Further, the optimal circuit information may include information indicating CNOT application orders for X syndrome measurement circuits. However, in this example, the CNOT application orders for the X syndrome measurement circuits are fixed to the application order D2. Therefore, even if the optimal circuit information does not include the CNOT application orders for X syndrome measurement circuits, the classical computer 100 is able to assign the application order D2 to the X syndrome measurement circuits for a patch element identified during execution of LS.

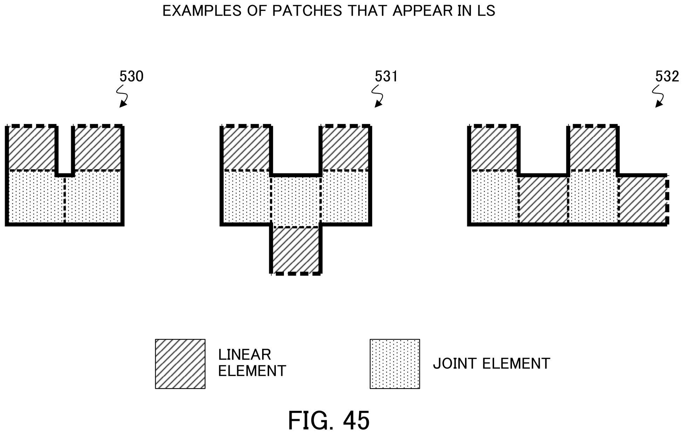

FIG. 45 illustrates examples of patches that appear in the course of LS. In the course of LS, patches having various shapes appear. Patches 530, 531, and 532 are examples of patches that appear in the course of LS. For example, boundaries of the patches 530, 531, and 532 indicated by thick dotted lines are X boundaries. Boundaries of the patches 530, 531, and 532 indicated by solid lines are Z boundaries.

Each patch of any shape, including the patches 530, 531, and 532, is decomposed into linear elements and joint elements. The classical computer 100 determines in advance CNOT application orders for syndrome measurement circuits through the optimization process for various joint elements. The classical computer 100 holds the determined application orders as optimal circuit information. Based on the optimal circuit information, the classical computer 100 is able to quickly determine a circuit schedule for the patches having various shapes identified during execution of LS.

The following describes a processing procedure performed by the classical computer 100.

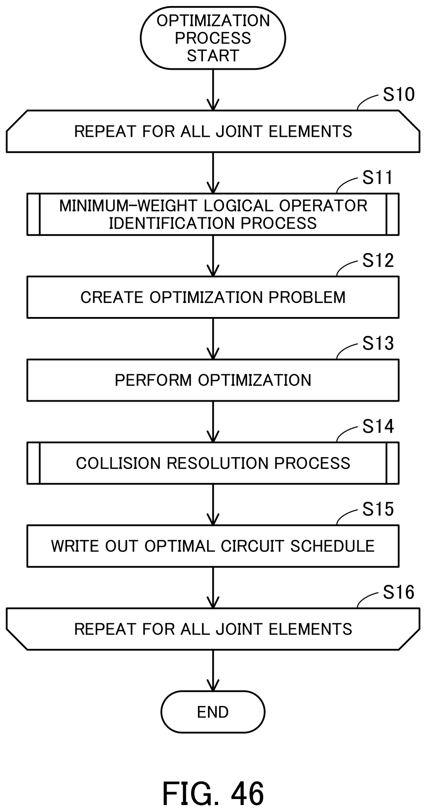

FIG. 46 is a flowchart illustrating an example of the optimization process.

(Step S10) The joint element identification unit 120 identifies joint elements from among a plurality of patch elements identified based on code information. The optimization processing unit 130 repeatedly executes steps S11 to S14 for all joint elements identified by the joint element identification unit 120.

(Step S11) The optimization processing unit 130 performs a minimum-weight logical operator identification process. The minimum-weight logical operator identification process is a process for identifying a minimum-weight logical operator in a joint element. In this example, a logical operator to be identified is a logical Z operator. Details of the minimum-weight logical operator identification process will be described later.

(Step S12) The optimization processing unit 130 creates an optimization problem. For example, the optimization processing unit 130 formulates an optimization problem regarding a CNOT application order for the joint element of interest as a problem of minimizing the objective function H = H({σᵢ}) of Expression (1).

(Step S13) The optimization processing unit 130 performs the optimization of the CNOT application order. For example, the optimization processing unit 130 obtains a solution {σᵢ} that minimizes the objective function H using a predetermined optimization algorithm. The solution {σᵢ} may be a solution that minimizes the objective function H, that is, a local optimal solution.

(Step S14) The optimization processing unit 130 performs a collision resolution process for the solution {σᵢ} obtained by the optimization. The solution {σᵢ} indicates the CNOT application order obtained as a result of the optimization process. Details of the collision resolution process will be described later.

(Step S15) The optimization processing unit 130 writes out an optimal circuit schedule based on the result of the collision resolution. That is, the optimization processing unit 130 registers the optimal circuit schedule for the joint element of interest in association with the joint element in the optimal circuit information.

(Step S16) After executing steps S11 to S15 for all joint elements, the optimization processing unit 130 ends the repetition. Then, the optimization process is completed.

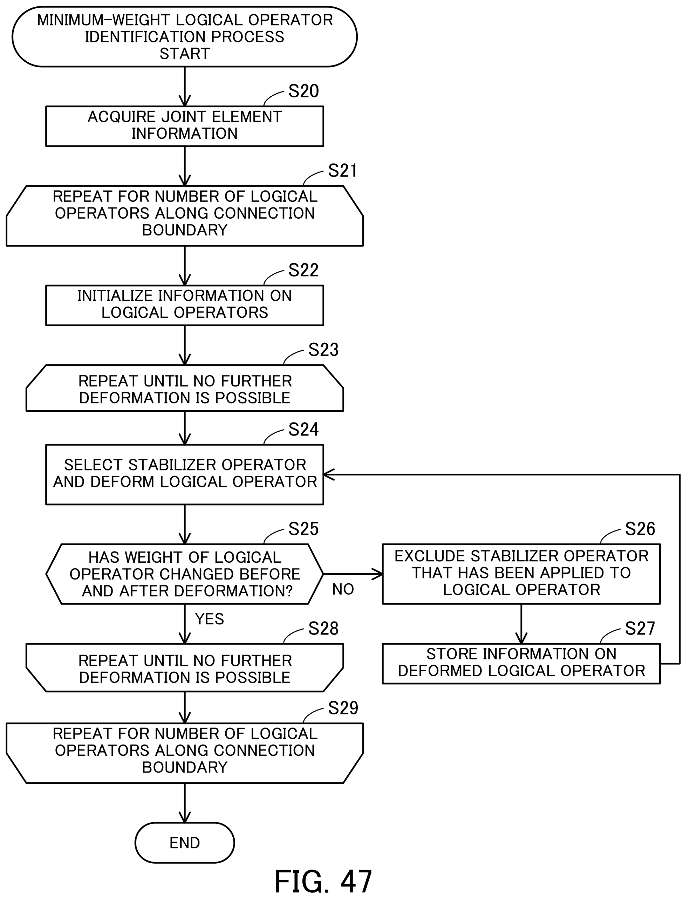

FIG. 47 is a flowchart illustrating an example of the minimum-weight logical operator identification process. The minimum-weight logical operator identification process corresponds to step S11.

(Step S20) The optimization processing unit 130 acquires joint element information. The joint element information is information indicating one joint element identified by the joint element identification unit 120.

(Step S21) The optimization processing unit 130 identifies connection boundaries in the joint element, based on the joint element information, and repeats steps S22 to S28 for the number of logical operators along a connection boundary.

(Step S22) The optimization processing unit 130 initializes information on logical operators along the connection boundary of interest. Specifically, the optimization processing unit 130 sets a logical Z operator along the connection boundary as a starting logical Z operator. The logical Z operator is a minimum-weight logical Z operator. The optimization processing unit 130 stores information on the minimum-weight logical Z operator as a starting point.

(Step S23) The optimization processing unit 130 repeatedly executes steps S24 to S27 until it is no longer possible to deform a logical operator while keeping the minimum weight.

(Step S24) The optimization processing unit 130 selects a stabilizer operator to be applied to the logical operator. For example, the optimization processing unit 130 deforms the logical Z operator by applying, to the logical Z operator, a Z stabilizer that shares a physical qubit with the logical Z operator.

(Step S25) The optimization processing unit 130 determines whether the weight of the logical operator has changed before and after the deformation. If the weight has changed, the process proceeds to step S28. If the weight has not changed, the process proceeds to step S26.

(Step S26) The optimization processing unit 130 excludes the stabilizer operator that has been applied to the logical operator in step S24 from subsequent selection candidates.

(Step S27) The optimization processing unit 130 stores information on the logical operator obtained through the current deformation. Then, the process proceeds to step S24.

(Step S28) When it becomes impossible to deform the logical operator while keeping the minimum weight, the optimization processing unit 130 ends the repetition.

(Step S29) When the optimization processing unit 130 identifies minimum-weight logical operators for all connection boundaries of the joint element of interest, the optimization processing unit 130 ends the repetition. Then, the minimum weight logical operator identification process is completed.

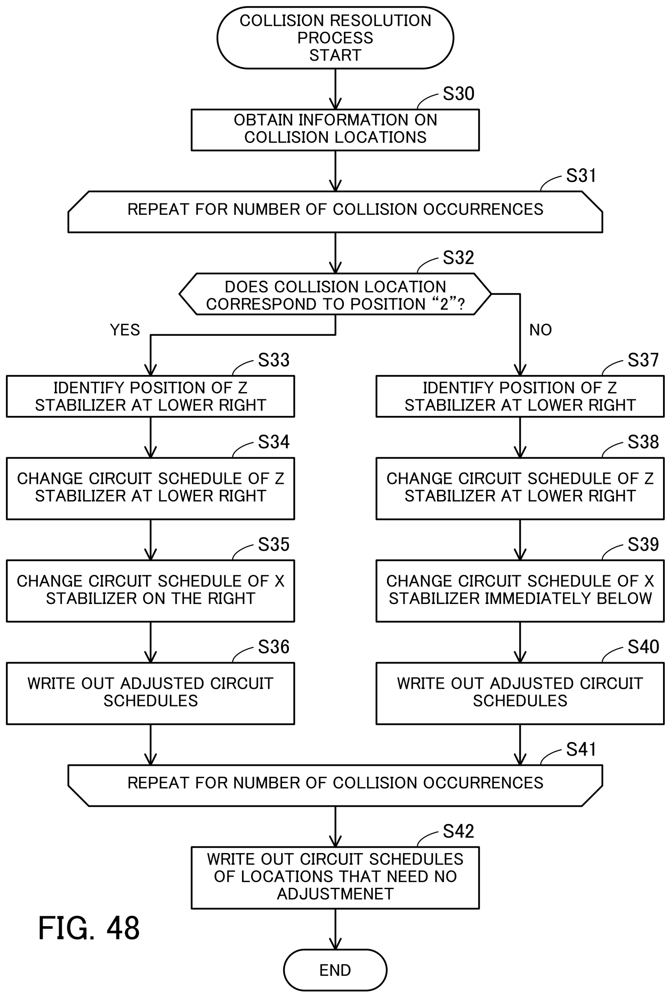

FIG. 48 is a flowchart illustrating an example of the collision resolution process. The collision resolution process corresponds to step S14.

(Step S30) The optimization processing unit 130 obtains information on collision locations in a target joint element based on an execution result of the optimization in step S13. The optimization processing unit 130 obtains the number of collision locations, that is, the number of collision occurrences, based on the information.

(Step S31) The optimization processing unit 130 repeats the following process for the number of collision occurrences.

(Step S32) The optimization processing unit 130 determines whether the collision location of interest corresponds to the position "2" in the CNOT application order. If the collision location corresponds to the position "2" in the CNOT application order, the process proceeds to step S33. If the collision location does not correspond to the position "2" in the CNOT application order, that is, if the collision location corresponds to the position "3", the process proceeds to step S37.

(Step S33) The optimization processing unit 130 identifies the position of a Z stabilizer located at the lower right of the collision location.

(Step S34) The optimization processing unit 130 changes a circuit schedule of the Z stabilizer located at the lower right of the collision location. Specifically, the optimization processing unit 130 shifts backward the (2, 3, 4)-th positions in the CNOT application order of the Z stabilizer, to the (3, 4, 5)-th positions.

(Step S35) The optimization processing unit 130 changes a circuit schedule of the X stabilizer located on the right of the Z stabilizer. Specifically, the optimization processing unit 130 shifts backward the (4)-th position in the CNOT application order of the X stabilizer to the (5)-th position.

(Step S36) The optimization processing unit 130 writes out the circuit schedules adjusted in steps S34 and S35. Then, the process proceeds to step S41.

(Step S37) The optimization processing unit 130 identifies the position of a Z stabilizer located at the lower right of the collision location.

(Step S38) The optimization processing unit 130 changes a circuit schedule of the Z stabilizer located at the lower right of the collision location. Specifically, the optimization processing unit 130 shifts forward the (1, 2, 3)-th positions in the CNOT application order of the Z stabilizer to the (0, 1, 2)-th positions.

(Step S39) The optimization processing unit 130 changes a circuit schedule of the X stabilizer located immediately below the Z stabilizer. The optimization processing unit 130 shifts forward the (1)-th position for the Z stabilizer to the (0)-th position.

(Step S40) The optimization processing unit 130 writes out the circuit schedules adjusted in steps S38 and S39. Then, the process proceeds to step S41.

(Step S41) After the optimization processing unit 130 completes the above process for the number of collision occurrences, the repetition ends.

(Step S42) The optimization processing unit 130 writes out circuit schedules of locations that need no adjustment. In this way, the optimization processing unit 130 integrates the circuit schedules written out in steps S36, S40, and S42 to thereby obtain an optimal circuit schedule for the entire joint element. The optimization processing unit 130 generates optimal circuit information that holds the optimal circuit schedule for the entire joint element in association with the joint element. Then, the collision resolution process is completed.

In this way, the optimization processing unit 130 stores the optimal circuit information indicating the CNOT application order for each joint element in the optimal circuit information storage unit 140. The optimal circuit information stored in the optimal circuit information storage unit 140 includes information on the CNOT application order optimized for each of a plurality of joint elements.

The classical computer 100 detects, during execution of LS, a patch that appears in the course of LS. Then, the classical computer 100 determines the CNOT application order for the patch based on the optimal circuit information stored in the optimal circuit information storage unit 140. Specifically, the classical computer 100 performs the following CNOT sequence circuit generation process.

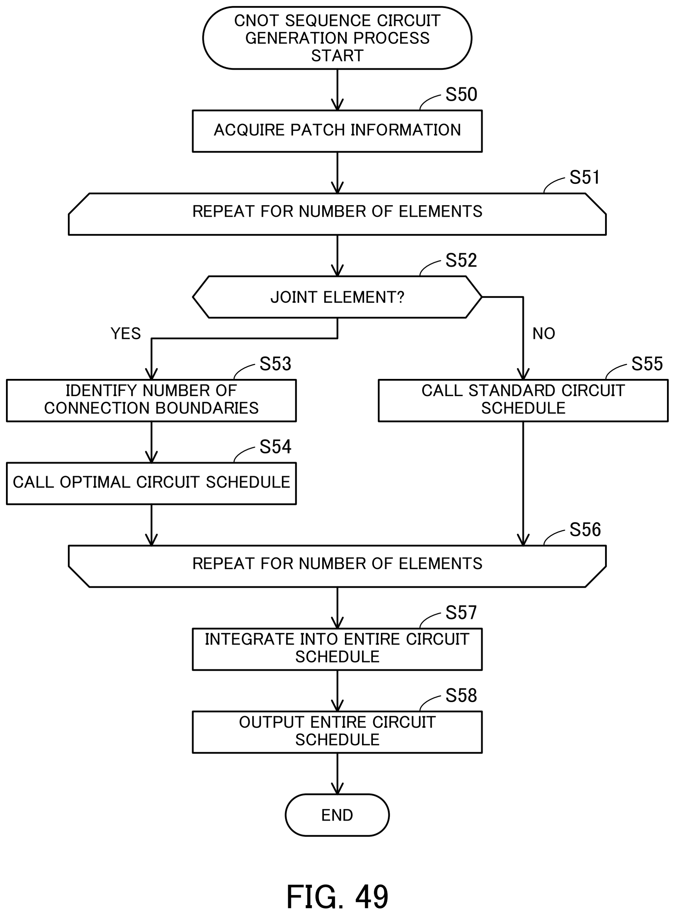

FIG. 49 is a flowchart illustrating an example of the CNOT sequence circuit generation process. The following process is performed during execution of LS by the quantum computer 200.

(Step S50) The LS region identification unit 150 acquires a Pauli measurement execution instruction. Based on the Pauli measurement execution instruction, the LS region identification unit 150 detects a patch appearing during the currently executed LS, and acquires patch information indicating the patch. The LS region identification unit 150 outputs the patch information to the patch element decomposition unit 160. The patch element decomposition unit 160 performs element decomposition of the patch based on the patch information and generates element information. The patch element decomposition unit 160 outputs the element information to the circuit schedule generation unit 170.

(Step S51) The circuit schedule generation unit 170 obtains the number of patch elements included in the patch of interest, that is, the number of elements, based on the element information. The circuit schedule generation unit 170 selects patch elements one by one, and repeats the following process for the number of elements.

(Step S52) The circuit schedule generation unit 170 determines whether the patch element of interest is a joint element. If it is a joint element, the process proceeds to step S53. If it is not a joint element, the process proceeds to step S55. If the patch element of interest is not a joint element, the patch element is a linear element.

(Step S53) The circuit schedule generation unit 170 identifies the number of connection boundaries of the joint element of interest.

(Step S54) The circuit schedule generation unit 170 calls an optimal circuit schedule based on the identified number of connection boundaries. For example, the circuit schedule generation unit 170 acquires identification information corresponding to the structure of the joint element based on the number of connection boundaries identified in step S53. The identification information may be acquired based on other indicators such as the locations of concatenation boundaries, the number of physical qubits included in the joint element, and a code distance in the joint element, in addition to the number of connection boundaries. For example, management information that holds the identification information in association with a plurality of indicators representing the structure of a joint element may be held in advance in the memory 102 or the storage device 103. The circuit schedule generation unit 170 may acquire, for example, the identification information corresponding to the joint element of interest from the management information. The circuit schedule generation unit 170 acquires, based on the optimal circuit information stored in the optimal circuit information storage unit 140, the CNOT application order associated with the identification information as an optimal circuit schedule. Then, the process proceeds to step S56.

(Step S55) The circuit schedule generation unit 170 calls a standard circuit schedule for a linear element.

(Step S56) After the above process is performed for the number of elements included in the current patch, the circuit schedule generation unit 170 ends the repetition.

(Step S57) The circuit schedule generation unit 170 integrates the optimal circuit schedule and the standard circuit schedule acquired for each patch element in steps S54 and S55 into an entire circuit schedule regarding the patch.

(Step S58) The circuit schedule generation unit 170 outputs the entire circuit schedule to the quantum operation execution management unit 180. The quantum operation execution management unit 180 generates a quantum operation instruction based on the entire circuit schedule. The quantum operation instruction includes information indicating the CNOT application order for each syndrome measurement circuit in the current patch. The quantum operation execution management unit 180 transmits the quantum operation instruction to the quantum computer 200. Then, the CNOT sequence circuit generation process is completed.

The quantum computer 200 performs Z syndrome measurements and X syndrome measurements in the patch of interest according to the CNOT application orders specified by the quantum operation instruction. The use of the appropriate CNOT application orders in the syndrome measurements reduces the probability of logical errors caused by hook errors.

Here, in evaluating logical errors for a certain patch, essentially non-trivial logical errors are those occurring in joint elements obtained by decomposing the patch. Therefore, the logical error probability was evaluated through quantum error correction simulation of a joint element. By arranging additional two-point X stabilizers at portions where a joint element connects to linear elements, the joint element becomes a well-defined logical qubit.

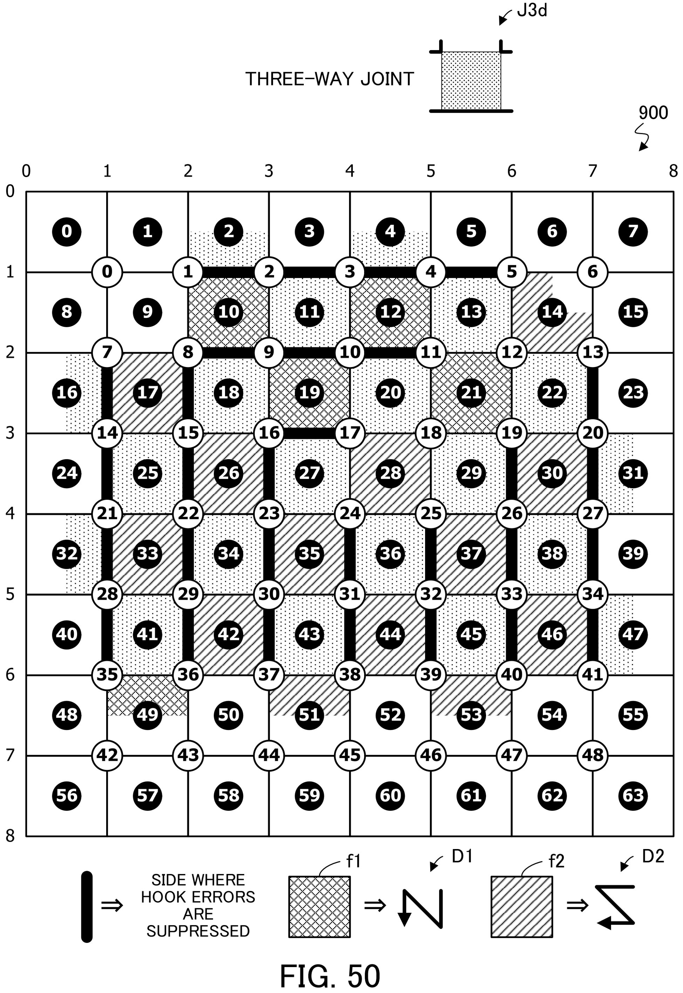

FIG. 50 illustrates an example of an optimization result for a three-way joint. An image 900 illustrates an optimization result of CNOT application orders for a three-way joint J3d with a code distance of 5. Black numbers in white circles, that is, numbers given to the vertices of squares indicate physical qubits. The black numbers in the white circles may be considered to be the identification numbers of the physical qubits. White numbers in black circles indicate Z stabilizers or X stabilizers. In the following description, the black numbers in the white circles are referred to as "black numbers". The white numbers in the black circles are referred to as "white numbers".

Regions with hatchings f1 and f2 in the image 900 correspond to Z stabilizers. Hatched regions other than the regions with the hatchings f1 and f2 in the image 900 correspond to X stabilizers. White square regions without hatching in the image 900 are blank locations illustrated for convenience.

Thick lines in the image 900 indicate sides where hook errors are suppressed. The sides where hook errors are suppressed correspond to sides where hook errors are prevented from occurring, which are identified by the optimization processing unit 130. The sides where hook errors are prevented from occurring may be said to be sides where hook errors are prohibited. That is, it is preferable to suppress occurrence of hook errors in an order along the sides. For example, a thick line connecting the black numbers "7", "14", "21", "28", and "35" is one of the sides where hook errors are suppressed.

Each region with the hatching f1 indicates a Z stabilizer to which the application order D1 is assigned as the CNOT application order for the Z syndrome measurement circuit. For example, the application order D1 is assigned to the Z stabilizer with the white number "10". The black numbers "1", "2", "8", and "9" are given to the four vertices of a square region with the white number "10". The CNOT application order for the Z stabilizer with the white number "10" is the order of the black numbers "2", "9", "1", and "8".

Each region with the hatching f2 indicates a Z stabilizer to which the application order D2 is assigned as the CNOT application order for the Z syndrome measurement circuit. For example, the application order D2 is assigned to the Z stabilizer with the white number "17". The black numbers "7", "8", "14", and "15" are given to the four vertices of a square region with the white number "17". The CNOT application order for the Z stabilizer with the white number "17" is the order of the black numbers "8", "7", "15", and "14".

Note that the application order D2 is assigned to X stabilizers as their CNOT application orders.

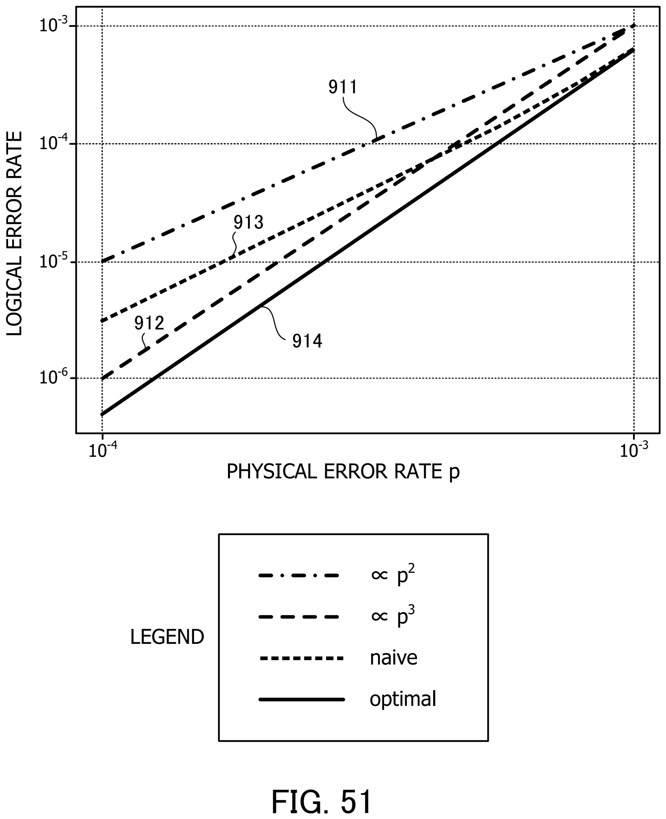

FIG. 51 illustrates examples of logical error rates for the three-way joint. Each line graph 911, 912, 913, and 914 illustrates a relationship between the logical error rate and the physical error rate p. The horizontal axis represents the physical error rate p. The vertical axis represents the logical error rate. The vertical axis is on a logarithmic scale. The physical error rate is in the range of 10⁻⁴ to 10⁻³. The number of shots is 4,000,000. Also, only average values are plotted.

The line graph 911 indicates the logical error rate ∝ p2.

The line graph 912 indicates the logical error rate ∝ p³.

The line graph 913 indicates a case where no countermeasure against hook errors is taken for the three-way joint J3d with a code distance of 5. Specifically, the line graph 913 indicates a case where the CNOT application orders of all Z stabilizers are fixed to a certain application order.

The line graph 914 indicates a case where the classical computer 100 takes the countermeasure against hook errors for the three-way joint J3d with a code distance of 5. That is, the line graph 914 indicates a case where the CNOT application orders of the Z stabilizers are optimized by the classical computer 100 as illustrated in FIG. 50.

In the case of a code distance of 5, the logical error rate ∝p³ is ideal. If no countermeasure against hook errors is taken, it is not possible to achieve the ideal performance. Specifically, the performance degrades to the logical error rate ∝p².

On the other hand, the line graph 914 is parallel to the line graph 912. Therefore, it is recognized that the logical error rate ∝p³, which is the original performance, is achieved by taking the countermeasure against hook errors.

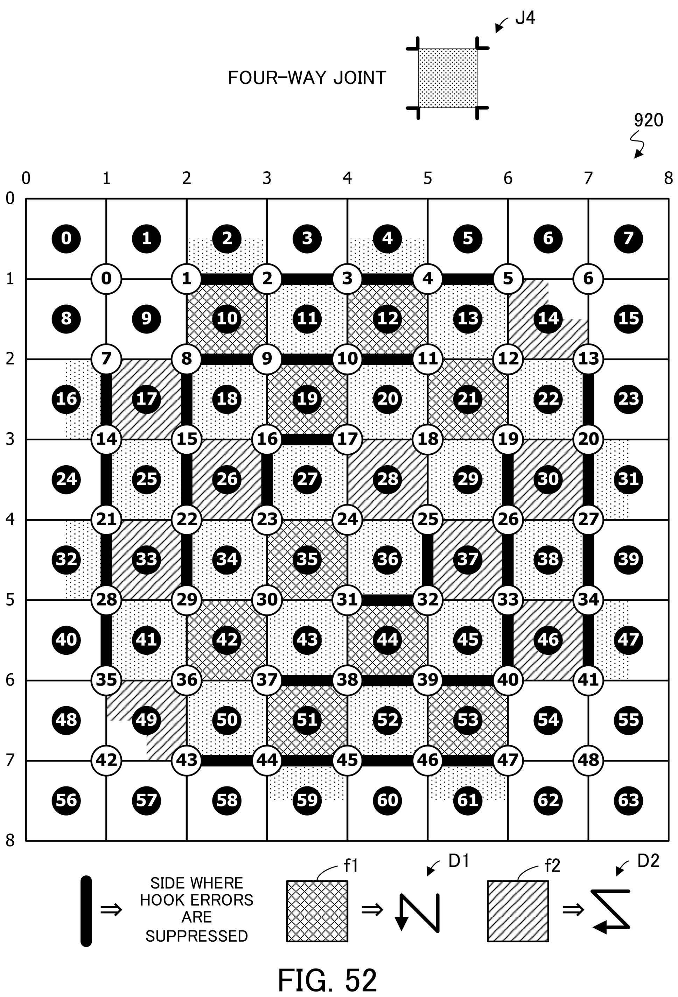

FIG. 52 illustrates an example of an optimization result for a four-way joint. An image 920 illustrates an optimization result of CNOT application orders for the four-way joint J4 with a code distance of 5. The meanings of black numbers and white numbers in the image 920 are the same as those in the image 900. In addition, the meanings of sides indicated by thick lines, hatchings f1 and f2, and hatching other than the hatchings f1 and f2 are the same as those in the image 900.

For example, a thick line connecting the black numbers "7", "14", "21", "28", and "35" in the image 920 is one of the sides where hook errors are suppressed.

For example, the application order D1 is assigned to the Z stabilizer with the white number "51" as the CNOT application order. The CNOT application order of the Z stabilizer with the white number "51" is the order of the black numbers "38", "45", "37", and "44".

For example, the application order D2 is assigned to the Z stabilizer with the white number "46" as the CNOT application order. The CNOT application order of the Z stabilizer with the white number "46" is the order of the black numbers "34", "33", "41", and "40".

Note that the application order D2 is assigned to X stabilizers as their CNOT application orders.

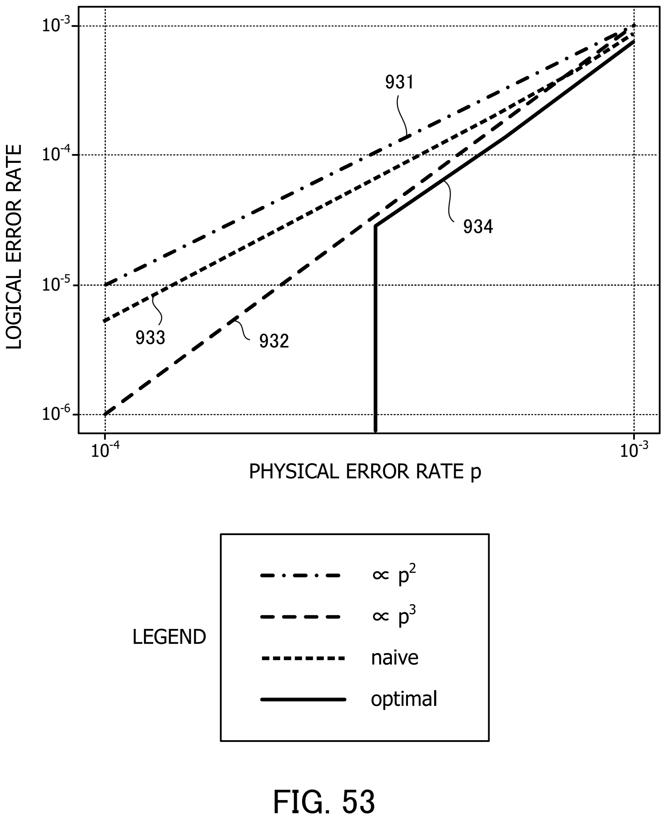

FIG. 53 illustrates examples of logical error rates for the four-way joint. Each line graph 931, 932, 933, and 934 illustrates a relationship between the logical error rate and the physical error rate p. The horizontal axis represents the physical error rate p. The vertical axis represents the logical error rate. The vertical axis is on a logarithmic scale. The other plotting conditions are the same as those in FIG. 51.

The line graph 931 indicates the logical error rate ∝ p2.

The line graph 932 indicates the logical error rate ∝ p³.

The line graph 933 indicates a case where no countermeasure against hook errors is taken for the four-way joint J4 with a code distance of 5. Specifically, the line graph 933 indicates a case where the CNOT application orders of all Z stabilizers are fixed to a certain application order.

The line graph 934 indicates a case where the classical computer 100 takes the countermeasure against hook errors for the four-way joint J4 with a code distance of 5. That is, the line graph 934 indicates a case where the CNOT application orders of the Z stabilizers are optimized by the classical computer 100 as illustrated in FIG. 52. Note that the logical error rates are not obtained for a partial range where the physical error rate is relatively small. Therefore, the line graph 934 has a partial range without any plots. It is considered that more samples are needed for the partial range.

According to the line graph 933, it is recognized that the performance degrades to the logical error rate ∝p² in the case where no countermeasure against hook errors is taken.

On the other hand, the line graph 934 is parallel to the line graph 932. Although the line graph 934 has a part without any plots, the behavior of the line graph 934 relative to the line graph 932 is similar to the case of the three-way joint J3d illustrated in FIG. 51. Therefore, it is recognized that the logical error rate ∝p³, which is the original performance, is achieved by taking the countermeasure against hook errors.

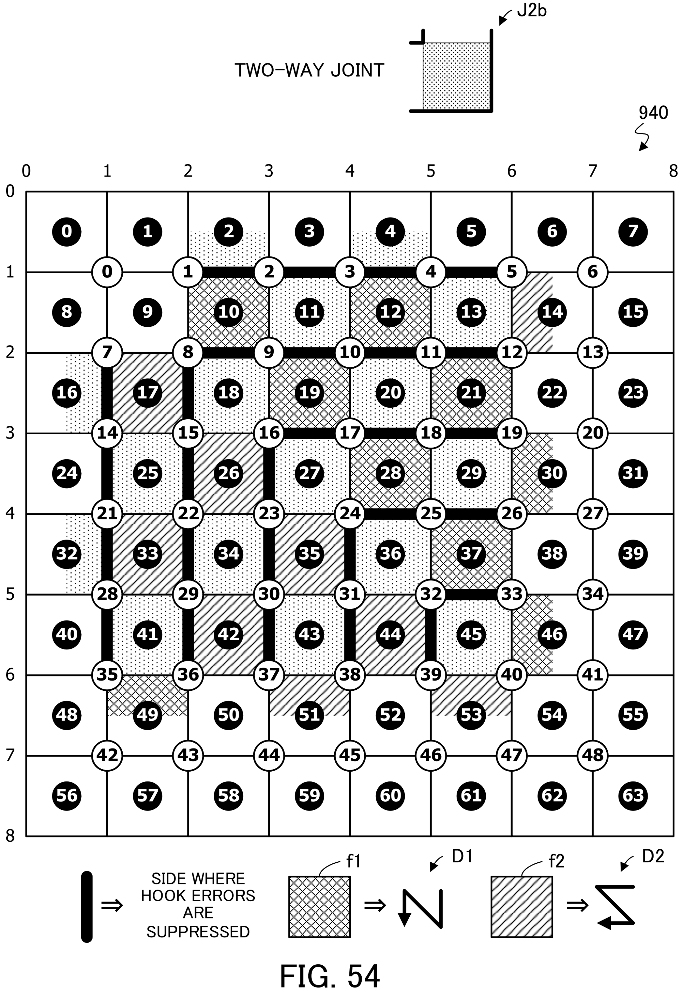

FIG. 54 illustrates a first example of an optimization result for a two-way joint. An image 940 illustrates an optimization result of CNOT application orders for the two-way joint J2b with a code distance of 5. The meanings of black numbers and white numbers in the image 940 are the same as those in the image 900. In addition, the meanings of sides indicated by thick lines, hatchings f1 and f2, and hatching other than the hatchings f1 and f2 are the same as those in the image 900.

For example, a thick line connecting the black numbers "7", "14", "21", "28", and "35" in the image 940 is one of the sides where hook errors are suppressed.

For example, the application order D1 is assigned to the Z stabilizer with the white number "37" as the CNOT application order. The CNOT application order of the Z stabilizer with the white number "37" is the order of the black numbers "26", "33", "25", and "32".

For example, the application order D2 is assigned to the Z stabilizer with the white number "44" as the CNOT application order. The CNOT application order of the Z stabilizer with the white number "44" is the order of the black numbers "32", "31", "39", and "38".

The application order D2 is assigned to X stabilizers as their CNOT application orders.

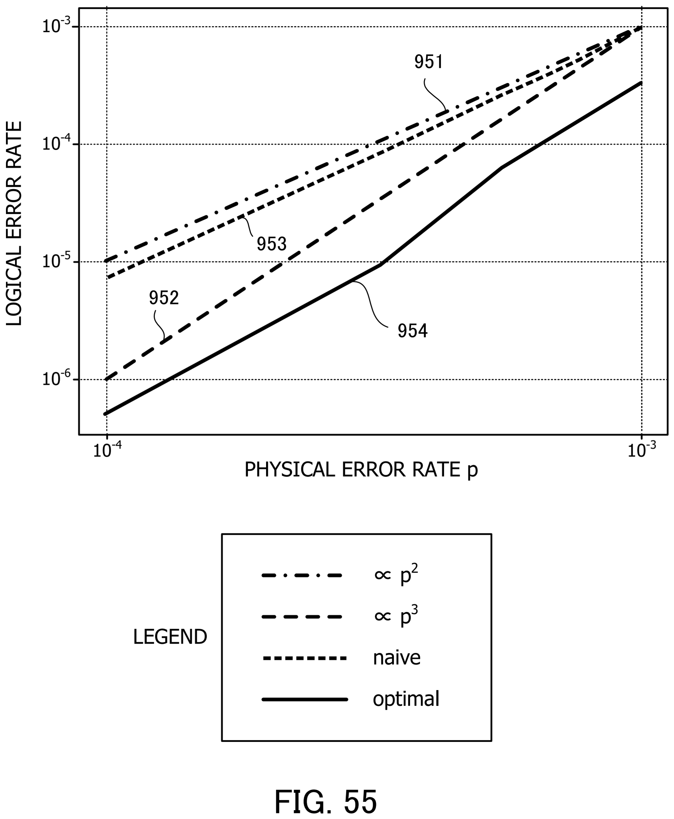

FIG. 55 illustrates first examples of logical error rates for the two-way joint. Each line graph 951, 952, 953, and 954 illustrates a relationship between the logical error rate and the physical error rate p. The horizontal axis represents the physical error rate p. The vertical axis represents the logical error rate. The vertical axis is on a logarithmic scale. The other plotting conditions are the same as those in FIG. 51.

The line graph 951 indicates the logical error rate ∝ p².

The line graph 952 indicates the logical error rate ∝ p³.

The line graph 953 indicates a case where no countermeasure against hook errors is taken for the two-way joint J2b with a code distance of 5. Specifically, the line graph 953 indicates a case where the CNOT application orders of all Z stabilizers are fixed to a certain application order.

The line graph 954 indicates a case where the classical computer 100 takes the countermeasure against hook errors for the two-way joint J2b with a code distance of 5. That is, the line graph 954 indicates a case where the CNOT application orders of the Z stabilizers are optimized by the classical computer 100 as illustrated in FIG. 54.

According to the line graph 953, it is recognized that, in the case where no countermeasure against hook errors is taken, the performance degrades to the logical error rate ∝ p².

On the other hand, the line graph 954 is substantially parallel to the line graph 952. Therefore, it is recognized that the logical error rate ∝ p³, which is the original performance, is achieved by taking the countermeasure against hook errors.

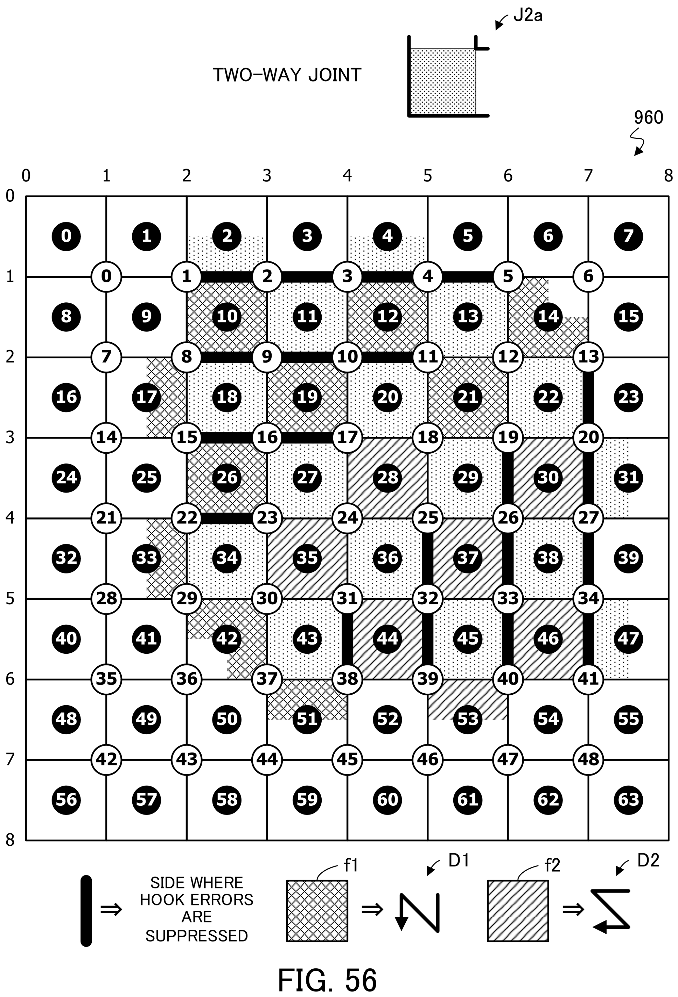

FIG. 56 illustrates a second example of an optimization result for a two-way joint. An image 960 illustrates an optimization result of CNOT application orders for a two-way joint J2a with a code distance of 5. The meanings of black numbers and white numbers in the image 960 are the same as those in the image 900. In addition, the meanings of sides indicated by thick lines, hatchings f1 and f2, and hatching other than the hatchings f1 and f2 are the same as those in the image 900.

For example, a thick line connecting the black numbers "1", "2", "3", "4", and "5" in the image 960 is one of the sides where hook errors are suppressed.

For example, the application order D1 is assigned to the Z stabilizer with the white number "26" as the CNOT application order. The CNOT application order of the Z stabilizer with the white number "26" is the order of the black numbers "16", "23", "15", and "22".

For example, the application order D2 is assigned to the Z stabilizer with the white number "37" as the CNOT application order. The CNOT application order of the Z stabilizer with the white number "37" is the order of the black numbers "26", "25", "33", and "32".

Note that the application order D2 is assigned to X stabilizers as their CNOT application orders.

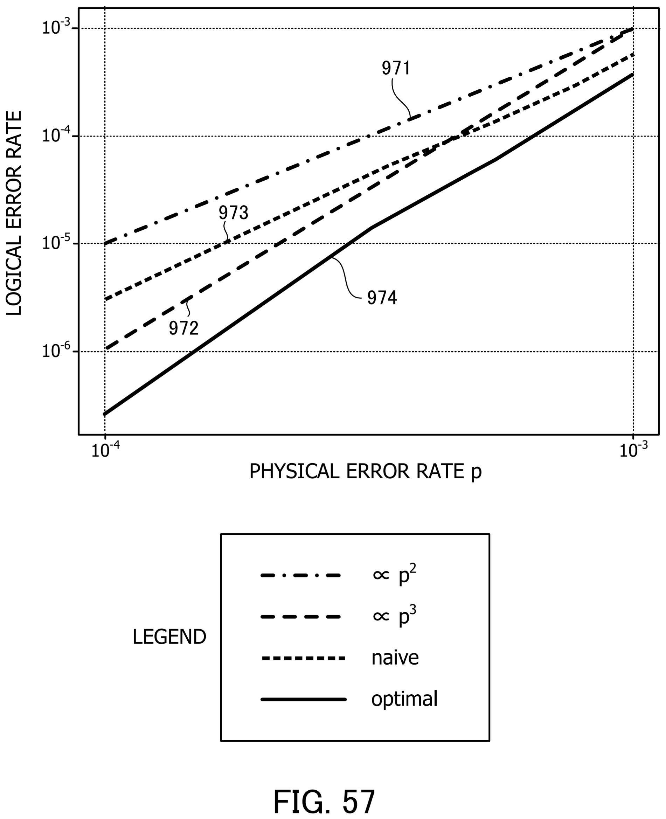

FIG. 57 illustrates second examples of logical error rates for the two-way joint. Each line graph 971, 972, 973, and 974 illustrates a relationship between the logical error rate and the physical error rate p. The horizontal axis represents the physical error rate p. The vertical axis represents the logical error rate. The vertical axis is on a logarithmic scale. The other plotting conditions are the same as those in FIG. 51.

The line graph 971 indicates the logical error rate ∝ p².

The line graph 972 indicates the logical error rate ∝ p³.

The line graph 973 indicates a case where no countermeasure against hook errors is taken for the two-way joint J2a with a code distance of 5. Specifically, the line graph 973 indicates a case where the CNOT application orders of all Z stabilizers are fixed to a certain application order.

The line graph 974 indicates a case where the classical computer 100 takes the countermeasure against hook errors for the two-way joint J2a with a code distance of 5. That is, the line graph 974 indicates a case where the CNOT application orders of the Z stabilizers are optimized by the classical computer 100 as illustrated in FIG. 56.

According to the line graph 973, it is recognized that, in the case where no countermeasure against hook errors is taken, the performance degrades to the logical error rate ∝ p2.

On the other hand, the line graph 974 is substantially parallel to the line graph 972. Therefore, it is recognized that the logical error rate ∝ p³, which is the original performance, is achieved by taking the countermeasure against hook errors.

As described above, by generating optimal circuit information in advance, the classical computer 100 is able to determine an application order of CNOT gates for each patch element based on the optimal circuit information. Therefore, even when a patch having a complex shape appears during execution of LS, the classical computer 100 is able to quickly determine the application order of CNOT gates for the patch. The classical computer 100 is able to promptly provide the quantum computer 200 with the application order of CNOT gates, thereby reducing a delay associated with the determination of the application order of CNOT gates. Thus, the classical computer 100 is able to support the quantum computer 200 so that syndrome measurements are performed at high speed. As a result, the classical computer 100 is able to suppress a delay in quantum computation to be performed using LS by the quantum computer 200 and to accelerate the quantum computation.

In addition, by decomposing a patch into elements, the classical computer 100 is able to reduce the targets of the optimization process to a per-patch-element basis. Therefore, the classical computer 100 is able to reduce the size of a target region for the optimization compared to the case where the optimization process is performed on the entire patch, and is able to suppress the calculation cost of the optimization process. Also, the number of shape types of joint elements that are subject to the optimization process is relatively small. Therefore, the classical computer 100 only needs to perform the optimization process for a relatively small number of joint elements.

In addition, the classical computer 100 optimizes the application order of CNOT gates for each patch element, thereby making it easy to reuse the optimization results for other patches. That is, the classical computer 100 is able to increase the reusability of the optimization results. For example, once the classical computer 100 performs the optimization at the time of compilation or the like, the classical computer 100 is able to reuse the optimization results for patches having arbitrary shapes. Each joint element is independent of other joint elements. Therefore, the classical computer 100 is able to perform the optimization process in parallel for a plurality of optimization target joint elements.

Furthermore, the classical computer 100 appropriately determines the application order of CNOT gates for a joint element based on the optimal circuit information, thereby making it possible to improve the hook error tolerance in syndrome measurement performed by the quantum computer 200. Thus, the classical computer 100 is able to reduce the logical error rate in quantum computation.

In addition, the classical computer 100 performs the following process, for example. The following process may be performed by the processor 101.

The joint element identification unit 120 identifies a first joint element from a first patch element group included in a first patch that appears in the course of lattice surgery. The first joint element is a patch element that is connected to two or more other patch elements along two orthogonal directions. The optimization processing unit 130 performs the optimization process for optimizing an application order of CNOT gates for a syndrome measurement circuit in the first joint element with respect to the direction of a logical operator defined for the first joint element. The optimization processing unit 130 stores, in the optimal circuit information storage unit 140, optimal circuit information that associates the first joint element with the application order of CNOT gates obtained as a result of the optimization process. When the patch element decomposition unit 160 detects, during execution of lattice surgery, that a second patch appears in the course of lattice surgery, the patch element decomposition unit 160 identifies a second patch element group included in the second patch. The circuit schedule generation unit 170 identifies a second joint element, which is a patch element corresponding to the first joint element, from the second patch element group. Based on the optimal circuit information stored in the optimal circuit information storage unit 140, the circuit schedule generation unit 170 assigns the application order of CNOT gates associated with the first joint element to the second joint element. Accordingly, the classical computer 100 is able to accelerate the determination of the application order of CNOT gates during the execution of lattice surgery.

In addition, the circuit schedule generation unit 170 identifies a linear element from the second patch element group. A linear element is a patch element that is connected to one or two other patch elements along one direction but is not connected to another patch element along a direction different from the one direction. The circuit schedule generation unit 170 assigns a predetermined application order as the application order of CNOT gates for a syndrome measurement circuit in the linear element. Thus, the classical computer 100 is able to efficiently determine the application order of CNOT gates for the syndrome measurement circuit in the second patch.

The optimization processing unit 130 performs the optimization process as follows. The optimization processing unit 130 identifies a minimum-weight logical operator defined for the first joint element. The optimization processing unit 130 identifies a first direction in which hook errors are prohibited, based on the direction of the minimum-weight logical operator. The optimization processing unit 130 identifies a syndrome measurement circuit that shares two physical qubits with the minimum-weight logical operator along the first direction. The optimization processing unit 130 optimizes the application order of CNOT gates such that a second direction of a hook error determined by the application order of CNOT gates for the syndrome measurement circuit is orthogonal to the first direction.

By doing so, the classical computer 100 is able to appropriately determine the application order of CNOT gates for the syndrome measurement circuit. Further, the classical computer 100 is able to reduce the logical error rate by informing the quantum computer 200 of the application order of the CNOT gates determined as described above.

For example, the direction in which each of the sides 821a and 822a in FIG. 38 extends is an example of the first direction. A Z syndrome measurement circuit corresponding to σ₂ in FIG. 41 is an example of a syndrome measurement circuit that shares two physical qubits with a minimum-weight logical operator along the first direction. For example, the Z syndrome measurement circuit corresponding to σ₂ shares two physical qubits with the minimum-weight logical Z operator 821 along the first direction. The Z syndrome measurement circuit corresponding to σ₂ also shares two physical qubits with the minimum-weight logical Z operator 822 along the first direction.

In addition, the direction in which each of the sides 824a and 825a in FIG. 38 extends is an example of the first direction. A Z syndrome measurement circuit corresponding to σ₈ in FIG. 41 is an example of a syndrome measurement circuit that shares two physical qubits with a minimum-weight logical operator along the first direction. For example, the Z syndrome measurement circuit corresponding to σ₈ shares two physical qubits with the minimum-weight logical Z operator 824 along the first direction. The Z syndrome measurement circuit corresponding to σ₈ also shares two physical qubits with the minimum-weight logical Z operator 825 along the first direction.

For example, a basis used for the measurements of logical qubits using lattice surgery is the Z basis. Logical operators are logical Z operators. Syndrome measurement circuits are Z syndrome measurement circuits. Thus, the classical computer 100 is able to limit optimization targets to Z syndrome measurement circuits. The classical computer 100 is able to fix the application order of CNOT gates for X syndrome measurement circuits. Therefore, the classical computer 100 is able to efficiently perform the optimization process.

For example, the basis used for the measurements of logical qubits using lattice surgery may be the X basis. In this case, logical operators are logical X operators. Syndrome measurement circuits are X syndrome measurement circuits. Thus, the classical computer 100 is able to limit optimization targets to X syndrome measurement circuits. The classical computer 100 is able to fix the application order of the CNOT gates for Z syndrome measurement circuits. Therefore, the classical computer 100 is able to efficiently perform the optimization process.

The quantum operation execution management unit 180 generates a quantum operation instruction based on the assignment of the application order of CNOT gates to each of a plurality of second patch elements belonging to the second patch element group. The quantum operation instruction specifies the application orders of CNOT gates for the syndrome measurement circuits included in the second patch. The quantum operation execution management unit 180 transmits the quantum operation instruction to the quantum computer 200 that performs lattice surgery. By doing so, the classical computer 100 is able to support the quantum computer 200 to perform syndrome measurements based on the appropriate application orders of CNOT gates. In addition, the classical computer 100 is able to reduce the logical error rate of quantum computation performed by the quantum computer 200.

Further, the optimization processing unit 130 may perform collision resolution as part of the optimization process. More specifically, the optimization processing unit 130 detects the occurrence of a collision, on the basis of a result of optimization of an application order using an objective function or the like. A collision is a phenomenon in which two CNOT gates are applied to the same physical qubit simultaneously by two syndrome measurement circuits in the first joint element. The optimization processing unit 130 identifies a first stabilizer operator from the two stabilizer operators corresponding to the two syndrome measurement circuits, according to the arrangement of the two stabilizer operators. The optimization processing unit 130 identifies a second stabilizer operator adjacent to the first stabilizer operator in a specific direction relative to the first stabilizer operator. The optimization processing unit 130 resolves the collision by shifting forward or backward a first set of positions regarding the application order of CNOT gates for the first stabilizer operator and a second set of positions regarding the application order of CNOT gates for the second stabilizer operator. The first set of positions here includes one or more positions at which one or more CNOT gates are applied to one or more of four first physical qubits involved in the first syndrome measurement circuit corresponding to the first stabilizer operator. The second set of positions here includes one or more positions at which one or more CNOT gates are applied to one or more of four second physical qubits involved in the second syndrome measurement circuit corresponding to the second stabilizer operator.

By doing so, the classical computer 100 is able to perform the collision resolution appropriately. The classical computer 100 is able to limit syndrome measurement circuits whose circuit depth is increased, to some syndrome measurement circuits including, for example, the first syndrome measurement circuit and the second syndrome measurement circuit. Therefore, the classical computer 100 is able to minimize the influence of performance degradation caused by the increase in the circuit depth.

Here, as described above, a collision occurs at, for example, a physical qubit corresponding to the "second" or "third" position in a CNOT application order. In FIG. 44, for example, among two Z stabilizers sandwiching the collision location P2, the Z stabilizer located at the lower right as viewed in the drawing is an example of the first stabilizer operator. Similarly, for each of the collision locations P1 and P3, a Z stabilizer located at the lower right is identified as the first stabilizer operator.

Further, in the case where a collision occurs at the "third" position, the downward direction of the first stabilizer operator in FIG. 44 is an example of the "specific direction". In the case where a collision occurs at the "second" position, the rightward direction of the first stabilizer operator as viewed in the drawing is an example of the "specific direction". For example, in the case where the first stabilizer operator is a Z stabilizer, the second stabilizer operator is an X stabilizer.

In the case where a collision occurs at the "third" position, the optimization processing unit 130 shifts the first set of positions and the second set of positions forward. In this case, the first set of positions corresponds to the (1, 2, 3)-th positions for the first stabilizer operator. The second set of positions corresponds to the (0)-th position for the second stabilizer operator. Specifically, the optimization processing unit 130 shifts forward the (1, 2, 3)-th positions corresponding to the first set of positions to the (0, 1, 2)-th positions. Then, the optimization processing unit 130 shifts forward the (1)-th position corresponding to the second set of positions to the (0)-th position for the second stabilizer operator located directly below the first stabilizer operator that has been subjected to the forward shifting.

In the case where a collision occurs at the "second" position, the optimization processing unit 130 shifts the first set of positions and the second set of positions backward. In this case, the first set of positions corresponds to the (2, 3, 4)-th positions for the first stabilizer operator. Further, the second set of positions corresponds to the (4)-th position for the second stabilizer operator. Specifically, the optimization processing unit 130 shifts backward the (2, 3, 4)-th positions corresponding to the first set of positions to the (3, 4, 5)-th positions. Then, the optimization processing unit 130 shifts backward the (4)-th position corresponding to the second set of positions to the (5)-th position for the second stabilizer operator located directly below the first stabilizer operator that has been subjected to the backward shifting.

Furthermore, the joint element identification unit 120 decomposes the first patch into a first patch element group by partitioning the first patch with a plurality of qubit lines arranged for a merging operation of a plurality of patches by lattice surgery. Thus, the classical computer 100 is able to efficiently identify the first patch element group. The lines G1, G2, and G3 are examples of the plurality of qubit lines.

According to one aspect, it is possible to accelerate determination of an application order of CNOT gates.

In any of the above aspects, the various features may be implemented in hardware, or as software modules running on one or more processors/computers.

The present invention also provides a computer program or a computer program product comprising instructions which, when executed by a computer, cause the computer to carry out any of the methods/method steps described herein, and a (non-transitory) computer-readable medium comprising instructions which, when executed by a computer, cause the computer to carry out any of the methods/method steps described herein. A computer program embodying the present invention may be stored on a (non-transitory) computer-readable medium, or it could, for example, be in the form of a signal such as a downloadable data signal provided from an Internet website, or it could be in any other form.

## Claims

1. A computer program that causes a computer to perform a process comprising:
identifying a first joint element (32) from a first patch element group (30a) included in a first patch (30) that appears in a course of lattice surgery, the first joint element being a patch element connected to two or more other patch elements along two orthogonal directions;
performing an optimization process for optimizing an application order of controlled NOT (CNOT) gates for a syndrome measurement circuit in the first joint element with respect to a direction of a logical operator (32a to 32f) defined for the first joint element;
storing optimal circuit information (11a) in storage means (11), the optimal circuit information associating the first joint element with the application order of the CNOT gates obtained as a result of the optimization process;
identifying, upon detecting during execution of the lattice surgery that a second patch (40) appears in the course of the lattice surgery, a second joint element (42) from a second patch element group (40a) included in the second patch, the second joint element being a patch element corresponding to the first joint element; and
assigning the application order of the CNOT gates associated with the first joint element to the second joint element, based on the optimal circuit information.

2. The computer program according to claim 1, wherein the process further includes:
identifying a linear element (41, 43) from the second patch element group (40a), the linear element being a patch element connected to one or two other patch elements along one direction and not connected to another patch element along a direction different from the one direction; and
assigning a predetermined application order as the application order of the CNOT gates for the syndrome measurement circuit in the linear element.

3. The computer program according to claim 1 or 2, wherein the optimization process includes:
identifying the logical operator (32a to 32f) having a minimum weight defined for the first joint element (32);
identifying a first direction in which a hook error is prohibited, based on a direction of the logical operator having the minimum weight; and
optimizing, for the syndrome measurement circuit sharing two physical qubits along the first direction with the logical operator having the minimum weight, the application order such that a second direction of the hook error determined by the application order of the CNOT gates is orthogonal to the first direction.

4. The computer program according to any of claims 1 to 3, wherein:
a basis used for a measurement of a logical qubit using the lattice surgery is a Z basis;
the logical operator is a logical Z operator; and
the syndrome measurement circuit is a Z syndrome measurement circuit.

5. The computer program according to any of claims 1 to 3, wherein
a basis used for a measurement of a logical qubit using the lattice surgery is an X basis;
the logical operator is a logical X operator; and
the syndrome measurement circuit is an X syndrome measurement circuit.

6. The computer program according to any of the preceding claims, wherein the process further includes transmitting, to a quantum computer (20) that performs the lattice surgery, an instruction specifying the application order of the CNOT gates for the syndrome measurement circuit included in the second patch (40), based on assigning of the application order of the CNOT gates to each of a plurality of second patch elements belonging to the second patch element group (40a).

7. The computer program according to any of the preceding claims, wherein the optimization process includes:
detecting an occurrence of a collision based on a result of optimizing the application order, the collision being a phenomenon in which two CNOT gates are applied to a same physical qubit simultaneously by two syndrome measurement circuits in the first joint element (32);
identifying a first stabilizer operator from two stabilizer operators corresponding to the two syndrome measurement circuits according to an arrangement of the two stabilizer operators;
identifying a second stabilizer operator located adjacent to the first stabilizer operator in a specific direction relative to the first stabilizer operator; and
resolving the collision by shifting forward or backward a first set of positions in an application order for a first syndrome measurement circuit corresponding to the first stabilizer operator, and a second set of positions in an application order for a second syndrome measurement circuit corresponding to the second stabilizer operator, the first set of positions being positions at which one or more CNOT gates are applied to one or more of four first physical qubits in the first syndrome measurement circuit, the second set of positions being positions at which one or more CNOT gates are applied to one or more of four second physical qubits in the second syndrome measurement circuit.

8. The computer program according to any of the preceding claims, wherein the process further includes decomposing the first patch (30) into the first patch element group (30a) by partitioning the first patch by a plurality of qubit lines arranged for a merging operation of a plurality of patches performed by the lattice surgery.

9. A quantum computation support method executed by a computer, the quantum computation support method comprising:
identifying a first joint element (32) from a first patch element group (30a) included in a first patch (30) that appears in a course of lattice surgery, the first joint element being a patch element connected to two or more other patch elements along two orthogonal directions;
performing an optimization process for optimizing an application order of CNOT gates for a syndrome measurement circuit in the first joint element with respect to a direction of a logical operator (32a to 32f) defined for the first joint element;
storing optimal circuit information (11a) in storage means (11), the optimal circuit information associating the first joint element with the application order of the CNOT gates obtained as a result of the optimization process;
identifying, upon detecting during execution of the lattice surgery that a second patch (40) appears in the course of the lattice surgery, a second joint element (42) from a second patch element group (40a) included in the second patch, the second joint element being a patch element corresponding to the first joint element; and
assigning the application order of the CNOT gates associated with the first joint element to the second joint element, based on the optimal circuit information.

10. An information processing apparatus comprising:
storage means (11); and
processing means (12) for:
identifying a first joint element (32) from a first patch element group (30a) included in a first patch (30) that appears in a course of lattice surgery, the first joint element being a patch element connected to two or more other patch elements along two orthogonal directions;
performing an optimization process for optimizing an application order of CNOT gates for a syndrome measurement circuit in the first joint element with respect to a direction of a logical operator (32a to 32f) defined for the first joint element;
storing optimal circuit information (11a) in the storage means, the optimal circuit information associating the first joint element with the application order of the CNOT gates obtained as a result of the optimization process;
identifying, upon detecting during execution of the lattice surgery that a second patch (40) appears in the course of the lattice surgery, a second joint element (42) from a second patch element group (40a) included in the second patch, the second joint element being a patch element corresponding to the first joint element; and
assigning the application order of the CNOT gates associated with the first joint element to the second joint element, based on the optimal circuit information.
